# EUROPÄISCHE PATENTSCHRIFT

(11) **EP 3 752 694 B1**
(45) Veröffentlichungstag und Bekanntmachung des Hinweises auf die Patenterteilung: **30.08.2023**
(21) Anmeldenummer: 19714318.3
(22) Anmeldetag: 12.02.2019
(51) Int. Cl.: E04H 6/06, B66F 7/02

(54) **AUTOPARKVORRICHTUNG**
CAR PARKING DEVICE
DISPOSITIF DE STATIONNEMENT DE VOITURE

(30) Priorität: 12.02.2018 DE 202018100746 U; 28.05.2018 DE 202018102976 U; 12.11.2018 DE 202018106415 U
(43) Veröffentlichungstag der Anmeldung: 23.12.2020
(73) Patentinhaber: Klaus Multiparking GmbH, 88319 Aitrach (DE)
(72) Erfinder: FAESSLER, Norbert, 88430 Haslach (DE); ZOBEL, Fabian, 88430 Rot a.d. Rot / Haslach (DE)
(74) Vertreter: Patentanwälte Olbricht, Buchhold, Keulertz Partnerschaft mbB
(86) Internationale Anmeldenummer: PCT/EP2019/053446
(87) Internationale Veröffentlichungsnummer: WO 2019/155088

(56) Entgegenhaltungen:
- WO-A1-2019/129813
- CN-A- 102 041 911
- DE-A1- 19 533 887
- US-A- 3 027 024

## Beschreibung

Die Erfindung betrifft eine Autoparkvorrichtung mit einem Gestell, an dem zumindest eine bewegbare, insbesondere anhebbare oder absenkbare Plattform vorgesehen ist und die Autoparkvorrichtung mit einer Kette ausgestattet ist, die mindestens teilweise Teil mindestens eines Kettenumlenksystem ist. Das Kettenumlenksystem besteht aus mindestens einem Kettenstück, welches ein Rollenkettenstück ist, und einem Umlenkstück.

Eine gattungsgemäße Autoparkvorrichtung mit einem Kettenumlenksystem ist zum Beispiel aus der deutschen Patentschrift 195 33 887 der Anmelderin bekannt. US 3 027 024 A und CN 102 041 911 A offenbaren weitere gattungsgemäße Autoparkvorrichtungen.

In DE 195 33 887 A1 ist als Umlenkstück des hier beschriebenen Kettenumlenksystems eine Rollenanordnung vorgesehen. Die Rollenanordnung bedingt eine drehbare Lagerung der Rolle und daher einen erhöhten Aufwand.

Die Erfindung hat es sich zur Aufgabe gemacht, diesen Stand der Technik zu verbessern und insbesondere eine kostengünstigere Lösung für ein Kettenumlenksystem vorzuschlagen.

Diese Aufgabe der Erfindung wird gelöst durch Autoparkvorrichtung gemäß Anspruch 1 mit einem Gestell, an dem zumindest eine bewegbare, insbesondere anhebbare oder absenkbare Plattform vorgesehen ist und die Auto-parkvorrichtung mit einer Kette ausgestattet ist, die mindestens teilweise Teil mindestens eines Kettenumlenksystem ist, wobei das Kettenumlenksystem aus mindestens einem Kettenstück und einem Umlenkstück besteht, welches eine gebogene Fläche aufweist und das Kettenstück im Anwendungsfall zumindest teilweise auf der gebogenen Fläche aufliegt, wodurch die Zug- oder Druckrichtung des Kettenstücks abgelenkt ist, wobei das jeweilige Umlenkstück, am Gestell oder an der Plattform angeordnet ist und das Umlenkstück so angeordnet ist, dass es einen rotatorischen Freiheitsgrad von weniger als 360° aufweist.

Zur Lösung der Aufgabe ist das Umlenkstück als plattenförmige Scheibe ausgeführt, wobei die gebogene Fläche des Umlenkstücks konvex gebogen ist, wobei das Kettenstück als Rollenkettenstück ausgeführt ist und die Kettenrollen dieses Rollenkettenstücks die konvex gebogene Fläche des Umlenkstücks berühren und bei Bewegung des Kettenstücks auf der konvex gebogenen Fläche abrollen.

Das in der erfindungsgemäßen Autoparkvorrichtung vorgeschlagene, neuartige Umlenkstück benötigt für ein erfindungsgemäßes Funktionieren keine drehbare, insbesondere endlosdrehende Lagerung (wie zum Beispiel einen Kugellager), wie die im Stand der Technik vorgeschlagene Rollenanordnung oder die bekannten drehbar gelagerten Kettenräder. Dadurch verringern sich die Kosten für das gesamte Kettenumlenksystem erheblich. Die Anordnung ist auch ausreichend verschleißsicher, da erfindungsgemäß Rollenketten eingesetzt werden, bei welchen die auf der Fläche aufliegenden Kettenteile in den jeweiligen Kettengliedern drehbar gelagert sind und so eine Abrollbewegung des bewegten Kettenstücks gegenüber dem Umlenkstück erlauben. Die Kombination aus einer Rollenkette mit einem sich nicht endlos drehenden Umlenkstück ist besonders geeignet für niedrige Geschwindigkeiten des Kettenstückes und gleichzeitig hohen Lasten, die durch das Kettenstück bewegt werden. Derartige Betriebszustände des Kettenstückes liegen üblicherweise bei einer Autoparkvorrichtung vor, bei der das Kettenstück zum Anheben und Absenken der Plattform eingesetzt wird.

Das erfindungsgemäß vorgeschlagene Kettenumlenksystem wird dabei nicht nur in einer ebenfalls erfindungsgemäßen Autoparkvorrichtung vorgeschlagen, sondern besitzt eigenständig weitere wesentliche Vorteile, die auch in anderen Anwendungen, nicht nur bei Autoparkvorrichtungen, vorteilhaft eingesetzt werden können. Nicht beansprucht ist ein Kettenumlenksystem, unabhängig von einer Autoparkvorrichtung, wobei das Kettenumlenksystem aus mindestens einem Kettenstück, vorzugsweise einem Rollenkettenstück und einem Umlenkstück besteht, welches eine gebogene Fläche aufweist und das Kettenstück im Anwendungsfall zumindest teilweise auf der gebogenen Fläche aufliegt, wodurch die Zug- oder Druckrichtung des Kettenstücks abgelenkt ist und das Umlenkstück so angeordnet ist, dass es einen rotatorischen Freiheitsgrad von weniger als 360° aufweist ist somit ausdrücklich offenbart und beschrieben.

Das Umlenkstück ist so angeordnet, dass es einen rotatorischen Freiheitsgrad von weniger als 360° aufweist. Eine besonders gute Verbesserung des Standes der Technik wird dadurch erreicht, dass das Umlenkstück einen begrenzten rotatorischen Freiheitsgrad aufweist. Dadurch wird keine umlaufende rotatorische Lagerung des Umlenkstückes benötigt. Durch das Einsparen einer solchen Drehlagerung wird der Aufwand zur Herstellung eines Kettenumlenksystems deutlich reduziert. Gleichzeitig steigt die Zuverlässigkeit des Systems, da kein Drehlager oder rotatorische Lager benötigt wird, welches verschleißbedingt ausfallen kann. Die einfachste Lösung ist, das Umlenkstück starr anzuordnen, so dass es gar keinen rotatorischen Freiheitsgrad aufweist. Das Kettenstück läuft zur Umlenkung einfach über die gebogene Fläche des Umlenkstückes. In der Ausführungsform, in der das Kettenstück von einem Rollenkettenstück gebildet wird, rollen die Kettenrollen auf der gebogenen Fläche ab, wobei das Umlenkstück in Ruhe und unbewegt bleibt. In einigen Anwendungsfällen, die weiter unten beschrieben werden, kann es vorteilhaft sein, dass das Umlenkstück zumindest einen kleinen rotatorischen Freiheitsgrad aufweist. So kann beispielsweise zur Anordnung von Wächtern, die die korrekte Funktionsweise des Kettenumlenksystems überwachen, ein rotatorischer Freiheitsgrad von 0,1 bis 5°, 10° oder auch 15° vorteilhaft sein. Weiterhin können rotatorische Freiheitsgrade im Bereich bis zu einer vollen Drehung, was 360° entspricht, für das Umlenkstück vorgesehen werden. Der rotatorische Freiheitsgrad ist erfindungegemäß auch geringer als 360° und beträgt vorzugsweise 30°, 60°, 90°, 120°, 150°, 180°, 210°, 240°, 270°, 300° oder 330°.

Unter einem rotatorischem Freiheitsgrad ist ein Freiheitsgrad zu verstehen, der eine Drehung der gebogenen Fläche um eine Achse ermöglicht, die parallel zu der gebogenen Fläche oder zumindest parallel zu einem Teil der gebogenen Fläche verläuft. Die gebogene Fläche ist günstigerweise in ihrer Abwicklung länglich ausgeführt, d.h. sie weist eine Längendimension auf, die deutlich länger ist als die Breitendimension. Die Abwicklung ist günstigerweise in Form eines Rechteckes ausgeführt. Die Breitendimension dieses Rechteckes ist geringfügig kleiner als die Breite der Kettenrollen eines als Kettenrollenstück ausgeführten Kettenstücks. Die Längendimension wiederum deutlich länger als die Breitendimension ausgeführt. Typischerweise ist die Längendimension um den Faktor fünf oder größer länger als die Breitendimension. Dadurch wird erreicht, dass das Kettenstück durch die Breitendimension der gebogenen Fläche in Querrichtung geführt wird und in Längsrichtung, d.h. in Bewegungsrichtung des Kettenstücks auf mehreren Kettenrollen auf der gebogenen Fläche aufliegt. Die Längendimension und das Verhältnis von Längendimension zu Breitendimension sind auch abhängig von der Kettenteilung, d.h. abhängig vom Abstand zweier benachbarter Kettenrollen. Je größer diese Kettenteilung ist, desto länger wird die Längendimension gewählt um zu gewährleisten, dass stets mehrere Kettenrollen auf dem Gleitstück aufliegen. Die gebogene Fläche kann in ihrer Abwicklung als Rechteck beschrieben werden. Die gebogene Fläche entsteht dann aus der Abwicklung durch eine Krümmung, welche typischerweise um eine Achse beschrieben werden kann, die parallel zur Breitendimension verläuft. Der zuvor beschriebene rotatorische Freiheitsgrad liegt zu einer Achse vor, die parallel zur Breitendimension und damit auch parallel zur Krümmungsachse der gebogenen Fläche verläuft. Die zuvor verwendeten Begriffe Abwicklung und Krümmungsachse dienen zur mathematisch-geometrischen Beschreibung des Umlenkstückes und sind keine körperlichen Merkmale, die bei einem realen Umlenkstück vorliegen. Diese Begriffe dienen der Erklärung der Erfindung für den Fachmann.

Bei einer bevorzugten Ausgestaltung des Vorschlags ist vorgesehen, dass das Umlenkstück schwenkbar oder längsbeweglich gelagert ist, wobei die Anordnung so gewählt ist, dass keine unendliche drehbare Lagerung des Umlenkstückes vorgesehen ist. In dieser Ausführungsform ist das Umlenkstück schwenkbar gelagert. Unter einer schwenkbaren Lagerung kann zum einen das Vorsehen eines rotatorischen Freiheitsgrades, wie zuvor beschrieben, verstanden werden. Zusätzlich oder alternativ kann eine schwenkbare Lagerung auch in andere Raumrichtungen vorgesehen sein. So kann beispielsweise eine schwenkbare Lagerung um eine Raumachse vorgesehen werden, die sich rechtwinklig zur gebogenen Fläche oder zumindest zu einem Teil dieser gebogenen Fläche erstreckt. Eine derartige schwenkbare Lagerung ist vorteilhaft, um Toleranzen im Kettenumlenksystem auszugleichen oder ein Verklemmen des Kettenstückes auf dem Umlenkstück zu verhindern. Alternativ oder zusätzlich kann auch eine längsbewegliche Lagerung für das Umlenkstück vorgesehen werden. Unter einer längsbeweglichen Lagerung ist ein translatorischer Freiheitsgrad zu verstehen. Eine längsbewegliche Lagerung kann in mehreren Raumrichtungen vorgesehen werden. Günstiger Weise ist eine längsbewegliche Lagerung des Umlenkstückes in Richtungen vorgesehen, in denen das Kettenstück auf das Umlenkstück zuläuft oder von diesem weg läuft.

Des Weiteren ist vorgesehen, dass das Umlenkstück keinen rotatorischen Freiheitsgrad aufweist. In dieser Ausführungsform ist das Umlenkstück unbeweglich, starr gelagert und weist im montierten Zustand keinerlei Freiheitsgrade auf.

Erfindungsgemäß ist vorgesehen, dass das Kettenstück als Rollenkettenstück ausgeführt ist und die Kettenrollen dieses Rollenkettenstücks die gebogene Fläche des Umlenkstücks berühren und bei Bewegung des Kettenstücks auf der gebogenen Fläche abrollen. In dieser Ausführungsform ist das Kettenstück als Rollenkettenstück ausgeführt. Eine Rollenkette weist Kettenrollen auf, die um Achsen an oder in der Kette drehbar gelagert sind. Diese Kettenrollen sind somit drehbeweglich und können dadurch auf einer starr angeordneten Fläche, wie der gebogenen Fläche des Umlenkstückes abrollen. Bei der Umlenkung des Kettenstückes durch das Umlenkstück findet somit eine Abrollbewegung der Kettenrollen statt. Diese Abrollbewegung ist wesentlich verschleißärmer für das Kettenumlenksystem als eine rein gleitende Bewegung des Kettenstückes relativ zum Umlenkstück, die aber ebenfalls zur Erfindung gehört. Eine Ausführung des Kettenstückes als Rollenkette bringt somit weitere Vorteile bezüglich Standzeit und Zuverlässigkeit des gesamten Kettenumlenksystems.

Geschickter Weise ist vorgesehen, dass das Kettenumlenksystem zwei Umlenkstücke aufweist, wobei das Kettenstück auf den gebogenen Flächen beider Umlenkstücke zumindest teilweise aufliegt. In dieser Ausführungsform wird das Kettenstück durch zwei oder auch mehr Umlenkstücke umgelenkt. Das Kettenstück liegt dabei auf jedem dieser Umlenkstücke auf. Durch das Vorsehen mehrerer Umlenkstücke lässt sich das Kettenstück in mehrere Raumrichtungen (nacheinander) umlenken. Dabei kann ein Umlenkstück so ausgeführt sein, dass es das Kettenstück derart umlenkt, dass das Kettenstück unter Zugspannung auf dem Umlenkstück entlanggleitet und seine Raumrichtung so unter Zugspannung umgelenkt wird. Alternativ kann ein Umlenkstück so ausgeführt sein, dass es das Kettenstück im Schubbetrieb umgelenkt. Im Schubbetrieb liegt das Kettenstück auf der gegenüberliegenden Seite am Umlenkstück an, verglichen zum Zugbetrieb. Details zur Umlenkung im Zug- und Schubbetrieb sind bei einer Ausführungsform weiter unten beschrieben. Die zwei Umlenkstücke können in ihrer Art frei miteinander kombiniert werden, es sind jegliche Kombinationen aus für Zugbetrieb und Schubbetrieb ausgelegten Umlenkstücken mit offenbart.

In einer weiteren bevorzugten Ausführungsform ist vorgesehen, dass das Kettenstück in einem ersten Bereich vertikal von einer ortsfesten Einspannstelle zu einem ersten Umlenkstück verläuft, das Kettenstück anschließend vom ersten Umlenkstück in einem zweiten Bereich horizontal zu einem zweiten Umlenkstück verläuft und abschließend von dem zweiten Umlenkstück in einem dritten Bereich vertikal zu einer weiteren ortsfesten Einspannstelle verläuft. In dieser Ausführungsform umfasst das Kettenumlenksystem zwei Einspannstellen, die ortsfest angeordnet sind. An diesen Einspannstellen ist das Kettenstück an einem seiner Enden befestigt. Eine solche Einspannstelle kann beispielsweise eine Verschraubung am Boden oder an der Decke sein. Die Einspannstelle kann jedoch auch ortsfest an einem Gestell oder Rahmen einer Vorrichtung, beispielsweise einer Autoparkverrichtung angeordnet sein. Das Kettenstück verläuft zwischen den beiden Einspannstellen. Zwischen den beiden Einspannstellen sind zwei Umlenkstücke angeordnet. Von der ersten ortsfesten Einspannstelle verläuft das Kettenstück zunächst vertikal nach oben bis zu einem ersten Umlenkstück, an welchem das Kettenstück um 90° umgelenkt wird und somit nach dem ersten Umlenkstück nun horizontal verläuft. Am Ende dieses horizontal verlaufenden Bereichs ist das zweite Umlenkstück angeordnet, an welchem das Kettenstück um 90° in die andere Richtung, nämlich vertikal nach oben abgelenkt wird. Eine derartige Ausführungsform eines Kettenumlenksystems ist besonders geeignet für die Erzielung des Gleichlaufs einer Parkvorrichtung. Selbstverständlich können zwei ortsfeste Einspannstellen und zwei Umlenkstücke auch beliebig anders zueinander angeordnet werden um das Kettenstück zweimal hintereinander umzulenken. Zwischen den beiden ortsfesten Einspannstellen können auch mehr als zwei Umlenkstücke vorgesehen sein, über die das Kettenstück geführt wird. Das Vorsehen von mehr als zwei Umlenkstücken kann erforderlich oder nützlich sein, beispielsweise abhängig davon, wo bei einer Parkvorrichtung die Einleitung der Kraft zur Bewegung des beweglichen Teils der Vorrichtung erfolgt.

Des Weiteren ist günstiger Weise vorgesehen, dass die beiden ortsfesten Einspannstellen auf gegenüberliegenden Seiten des horizontal verlaufenden zweiten Bereichs des Kettenstücks angeordnet sind. In dieser Ausführungsform verläuft das Kettenstück so, dass sich das erste, durch ein erstes Umlenkstück abgelenkte vertikale Kettenstück in die eine Richtung zu dem darauf folgenden zweiten im Wesentlichen horizontal verlaufenden Bereich erstreckt. Der durch das zweite Umlenkstück abgelenkte dritte vertikal verlaufende Bereich des Kettenstücks ist auf der gegenüberliegenden Seite des zweiten horizontal verlaufenden Bereichs angeordnet. Durch eine solche Anordnung erstreckt sich das Kettenumlenksystem in horizontaler Richtung in Länge des zweiten Bereichs des Kettenstückes und in vertikaler Richtung in der Länge der Summe der Längen des ersten und des dritten Bereiches des Kettenstücks.

Erfindungsgemäß ist vorgesehen, dass das Umlenkstück als plattenförmige Scheibe ausgeführt ist. Unter plattenförmig ist hier zu verstehen, dass das Umlenkstück ebene Hauptflächen aufweist. Der funktionale Bereich des Umlenkstückes ist die gebogene Fläche, auf der das Kettenstück aufliegt. Die anderen Flächen oder Oberflächen des Umlenkstückes sind an der Umlenkung des Kettenstückes nicht direkt beteiligt. Wie weiter oben beschrieben weist die gebogene Fläche in der Abwicklung eine rechtwinklige, längliche Form auf. Durch die Krümmung dieser Abwicklung um zumindest eine Krümmungsachse entsteht die für die Funktion des Umlenkstückes wichtige gebogene Fläche. In der hier beschriebenen Ausführungsform ist das Umlenkstück als Scheibe ausgeführt, wobei die gebogene Fläche einen Teil der schmalen Seitenkante dieser Scheibe bildet. Die gro-βen Oberflächen der Scheibe sind die ebenen oder planen Hauptflächen. In den Hauptflächen bzw. durchgehend durch beide Hauptflächen sind günstiger Weise die Befestigungselemente für das Umlenkstück angeordnet. Durch diese Anordnung kommt das um die seitlich an der Scheibe angeordnete gebogene Fläche laufende Kettenstück nicht in Berührung mit den Befestigungselementen. Das als plattenförmige Scheibe ausgeführte Umlenkstück kann beispielsweise eine kreisrunde Hauptfläche aufweisen. Selbstverständlich kann die Hauptflächen auch andere Formen annehmen. In der Praxis sehr nützlich sind Hauptflächen, die die Form eines Kreissegmentes haben, wobei die gekrümmte Fläche des Kreissegment des die gebogene Fläche für die Umlenkung des Kettenstückes bildet, wobei die geraden Kanten des Kreissegmentes anderen die Begrenzungen des als Scheibe ausgeführten Umlenkstückes bilden. Ein so ausgeführtes Umlenkstück kann auch als Teilsegment oder Sektor eines als kreisförmige Scheibe ausgeführten Umlenkstückes beschrieben werden.

Des Weiteren ist in dem Vorschlag vorteilhafter Weise vorgesehen, dass das Umlenkstück als Segment einer plattenförmigen Scheibe ausgeführt ist, wobei die gebogene Fläche des Umlenkstückes eine Länge von 5° bis 360° beträgt. In dieser Ausführungsform ist das Umlenkstück ein Segment einer plattenförmigen Scheibe. Ein solches Segment ist ein Teil einer kreisförmigen Scheibe. Der gekrümmte Bereich dieses Segmentes bildet die gebogene Fläche. Die beiden anderen, geradlinig verlaufenden Begrenzungen des Segmentes bilden einen Winkel zueinander. Dieser Winkel beträgt günstigerweise 5° bis 360°. Der Winkel zwischen den beiden geraden Schenkeln des als Kreissegment ausgeführten Umlenkstückes kann auch als Länge der zwischen den beiden Schenkeln verlaufenen, gebogenen Fläche bezeichnet werden. Für einen Winkel zwischen den beiden geraden Schenkeln eines Kreissegment des von 5° bis 360° beträgt die Länge der zwischen diesen Schenkeln verlaufenden gebogenen Fläche daher 5° bis 360°.

Des Weiteren ist vorgesehen, dass das Umlenkstück als 90° Segment einer plattenförmigen Scheibe ausgeführt ist. In dieser Ausführungsform ist das Umlenkstück besonders einfach ausgeführt und hat die Form eines Viertelkreises. Ein solches Umlenkstück kann besonders einfach durch Teilung einer kreisförmigen Scheibe in vier Teile hergestellt werden. Durch die Form eines 90° Segments ist die gebogene Fläche lang genug, um ein Kettenstück um 90° umzulenken, was für viele Anwendungsfälle ausreichend ist.

Erfindungsgemäß ist vorgesehen, dass die gebogene Fläche des Umlenkstücks konvex gebogen ist. Alternativ und hier nicht beansprucht, kann diese auch konkav gebogen sein. Die Krümmung der gebogenen Fläche kann in zwei Richtungen ausgeführt sein. Bei einer konvex gekrümmten gebogenen Fläche wird ein unter Zug stehendes Kettenstück entlang der gebogenen Fläche abgelenkt.

Bei einer konkav gekrümmten gebogenen Fläche wird ein unter Druck stehendes Kettenstück umgelenkt.

Geschickter Weise ist vorgesehen, dass die gebogene Fläche des Umlenkstücks schraubenförmig ausgebildet ist und eine Länge von 180° bis 720° aufweist. Dieser Ausführungsform verläuft die gebogene Fläche schraubenförmig. Neben der bereits zuvor beschriebenen Krümmung der gebogenen Fläche, die der Ablenkung des Kettenstückes dient, erstreckt sich die gebogene Fläche über eine Länge von mehr als 360° und ist entlang einer Längsrichtung spiral- oder schraubenförmig gestreckt. Das Kettenstück umläuft ein solches Umlenkstück mehrmals und wird dabei nicht nur in einem anderen Winkel bezogen zur Ursprungsrichtung sondern auch in Richtung der Kettenbreite versetzt zur ursprünglichen Position von Umlenkstück abgeführt. Eine solche schraubenförmige, gebogene Fläche bietet somit den Vorteil, das Kettenstück auch entlang seiner Breitenrichtung abzulenken. Dadurch ergeben sich weitere Möglichkeiten, ein Kettenstück im dreidimensionalen Raum abzulenken und zu führen.

In einer weiteren bevorzugten Ausführungsform ist vorgesehen, dass das Umlenkstück eine Dicke besitzt, die geringfügig kleiner ist wie der innere Abstand der gegenüberliegenden Innenlaschen der als Rollenkette ausgebildeten Kette. In dieser Ausführungsform ist die Dicke des Umlenkstückes so gewählt, dass es zwischen die gegenüberliegenden Laschen einer Rollenkette passt. Dadurch liegen die Kettenrollen bei einer Führung des Kettenstückes über das Umlenkstück auf der gebogenen Fläche des Umlenkstückes auf. Die Ränder der Hauptflächen des Umlenkstückes führen dabei die Laschen der Rollenkette.

In einer vorteilhaften Ausgestaltung ist vorgesehen, dass ein Niederhalter vorgesehen ist, der in einem Abstand zur gebogenen Fläche des Umlenkstückes angeordnet ist und das Kettenstück durch diesen Abstand geführt ist und das Kettenstück diesen Abstand durch die gemeinsame Führung von Umlenkstück und Niederhalter nicht verlassen kann. In dieser Ausführungsform ist ein Niederhalter vorgesehen, der verhindert dass das Kettenstück ungewollt vom Umlenkstück springt oder dieses anderweitig verlässt. Das Kettenstück wird mit Spiel zwischen der gebogenen Fläche des Umlenkstückes und dem Niederhalter geführt. Dieses Spiel ist allerdings so bemessen, dass sich das Kettenstück zwar im Abstand zwischen Niederhalter und Umlenkstück im Betrieb bewegen kann, jedoch nicht vom Umlenkstück abspringen kann. Ohne Niederhalter besteht die Gefahr, dass das Kettenstück vom Umlenkstück springt, wenn das Kettenstück zu schwingen anfängt. Weiterhin tendiert das Kettenstück bei längerem Betrieb dazu länger zu werden, wodurch die Kettenspannung nachlässt. Diese Längung der Kette führt wiederum dazu, dass der Bewegungsspielraum des Kettenstückes rechtwinklig zur gebogenen Fläche zunimmt, was ein Abspringen des Kettenstückes begünstigt. Im Normalbetrieb berührt das Kettenstück den Niederhalter nicht. Erst bei einer Schwingungsbewegung des Kettenstückes schlägt dieses auf der, der gebogenen Fläche gegenüberliegenden Seite am Niederhalter an und wird durch diesen am Abspringen vom Umlenkstück gehindert.

Geschickter Weise ist vorgesehen, dass der Abstand kleiner als die Höhe der Kettenlaschen ist und der Abstand größer als der Durchmesser der Rollen ist. Entscheidend für die Funktion des Niederhalters ist dessen Position zur gebogenen Fläche des Umlenkstückes. Der Abstand des Niederhalters von der gebogenen Fläche ist kleiner, als die größte Dimension des Kettenstückes. Diese größte Dimension des Kettenstückes wird gebildet durch die Höhe der Kettenlaschen. Unter den Begriff Kettenlaschen fallen Innenlaschen und Außenlaschen. Dadurch, dass der Abstand kleiner als diese Höhe der Kettenlaschen ist, passen diese nicht durch den Abstand und verhindern so wirkungsvoll ein Abspringen des Kettenstückes. Der Abstand muss allerdings so bemessen sein, dass sich das Kettenstück im Normalbetrieb frei darin bewegen kann. Dafür muss der Abstand größer als der Außendurchmesser der Rollen bzw. Kettenrollen sein. Dadurch behindert der Niederhalter nicht die normale Bewegung des Kettenstückes auf dem Umlenkstück.

Vorteilhafter Weise ist vorgesehen, dass der Niederhalter nicht mit dem Umlenkstück verbunden ist. In dieser Ausführungsform ist der Niederhalter unabhängig vom Umlenkstück am Kettenumlenksystem angeordnet. Der Niederhalter ist dazu beispielsweise an einem festen Rahmen oder Gestell angebracht. Niederhalter und Umlenkstück können so unabhängig voneinander montiert und demontiert werden.

Des Weiteren ist günstiger Weise vorgesehen, dass der Niederhalter lösbar fest mit dem Umlenkstück verbunden ist. In dieser Ausführungsform ist der Niederhalter am Umlenkstück angebracht. Für den Fall, dass das Umlenkstück beweglich ausgeführt ist, bewegt sich so der Niederhalter zusammen mit dem Umlenkstück, so dass der Abstand auch bei sich bewegenden Umlenkstück stets gleich bleibt und das Kettenstück sicher geführt wird. Umlenkstück und Neiderhalter bilden dieser Ausführungsform eine Baugruppe, die auch noch weitere Bauteile oder Elemente enthalten kann.

Vorteilhafter Weise ist vorgesehen, dass der Abstand einstellbar ausgeführt ist. In dieser Ausführungsform kann der Abstand bei Inbetriebnahme oder während des Betriebs des Kettenumlenksystems eingestellt werden. Dies hat den Vorteil, dass der Abstand beispielsweise bei einer Längung der Kette nachträglich angepasst werden kann. Für diese einstellbare Ausführungsform kann der Niederhalter beispielsweise in einer Führung angeordnet sein und es können Einstellenelemente, wie beispielsweise Schrauben, vorgesehen sein, um die Position des Niederhalters zu verändern. Ein solcher einstellbarer Abstand, bzw. eine einstellbare Position des Niederhalters kann für Ausführungsformen vorgesehen werden, bei denen der Niederhalter fest mit dem Umlenkstück verbunden ist. Alternativ kann eine solche Einstellbarkeit selbstverständlich auch für eine Niederhalter vorgesehen werden, der nicht mit dem Umlenkstück fest verbunden ist sondern beispielsweise am Rahmen oder Gestell des Kettenumlenksystems angeordnet ist.

In einer vorteilhaften Ausgestaltung ist vorgesehen, dass der Niederhalter zumindest eine Fläche aufweist, die dazu vorgesehen ist, das Kettenstück an den Kettenlaschen oder den Rollen zu berühren. In dieser Ausführungsform weist der Niederhalter eine Fläche auf, die günstigerweise plan ausgeführt ist. Alternativ kann diese Fläche auch entsprechend der gebogenen Fläche des Umlenkstückes gebogen oder gekrümmt ausgeführt sein. Eine solche gekrümmte Fläche kann konvex oder konkav gekrümmt sein. Diese Fläche ist dazu vorgesehen, die Außenkante der Kettenlaschen zu berühren. Diese Au-βenkanten der Kettenlaschen schlagen bei einem Schwingen des Kettenstückes an der Fläche des Niederhalters an und werden dadurch von einem Abspringen vom Umlenkstück gehindert. Alternativ kann die Fläche des Niederhalters in ihrer Breitendimension ähnlich der Dicke des Umlenkstückes ausgeführt sein und das Kettenstück zwischen den Kettenlaschen, also auf den Rollen führen. Es wäre auch denkbar, als Niederhalter ein zweites Umlenkstück einzusetzen, welches eine zum ersten Umlenkstück komplementäre Form aufweist.

Des Weiteren ist günstiger Weise vorgesehen, dass ein Befestigungsbolzen vorgesehen ist, wobei das Umlenkstück drehbar um die Drehachse des Befestigungsbolzen angeordnet ist und das Umlenkstück über ein Verbindungsstück mit einem Wächter, insbesondere einem Kettenbruchwächter oder einem Kraftwächter verbunden ist. In dieser Ausführungsform wird das Umlenkstück zusätzlich zu seiner Funktion der Umlenkung des Kettenstückes zur Überwachung der Funktionsfähigkeit des gesamten Kettenumlenksystems eingesetzt. Dazu ist zunächst ein Befestigungsbolzen vorgesehen, mit dem das Umlenkstück an einem unbeweglichen Untergrund befestigt wird. Diese Befestigung mit dem Befestigungsbolzen ist allerdings nicht starr, sondern erlaubt eine Bewegung des Umlenkstückes. Zur Ermöglichung dieser Bewegung kann entweder der Befestigungsbolzen im Umlenkstück beweglich gelagert werden oder alternativ die Verbindung zwischen Befestigungsbolzen und Umlenkstück starr ausgeführt sein und statt dessen die Verbindung zwischen Befestigungsbolzen und dem Untergrund beweglich ausgeführt werden. Günstiger Weise wird durch eine solche Befestigung mit einem Befestigungsbolzen ein rotatorischer Freiheitsgrad für das Umlenkstück erzeugt, das Umlenkstück ist um die Symmetrieachse des Befestigungsbolzen drehbar gelagert.

Das Umlenkstück ist weiterhin mit einem Wächter verbunden, welcher die ordnungsgemäße Funktionsweise des Kettenumlenksystems überwacht. Günstiger Weise überwacht dieser Wächter Parameter, die in Zusammenhang mit dem Kettenstück stehen. So überwacht beispielsweise ein Kettenbruchwächter ob das Kettenstück vorhanden ist oder ob ein Bruch im Kettenstück vorliegt. Ein Kraftwächter überwacht analog die im Kettenstück vorliegende Kraft und kann selbstverständlich auch einen Kettenbruch feststellen. Die von solchen Wächtern ermittelten Informationen zum Kettenstück werden dazu eingesetzt, das Kettenumlenksystem zu überwachen. Günstiger Weise ist eine entsprechende Steuerung oder Regelung vorgesehen, in welche die Informationen des Wächters als Eingangssignale eingehen und entsprechende Ausgangssignale basierend auf der Art der Eingangssignale erzeugt werden. Die Verbindung zwischen dem zumindest in geringem Maß beweglich angeordneten Umlenkstück und dem Wächter erfolgt über ein Verbindungsstück welches verschiedenartig ausgeführt sein kann. So ist das Verbindungsstück beispielsweise als starrer Verbindungsstift ausgeführt. Alternativ kann das Verbindungsstück auch flexibel ausgeführt sein, beispielsweise als Band, Draht, Seil oder Kette. Im Betrieb des Kettenumlenksystems wird das Kettenstück durch das Umlenkstück in seiner Bewegungsrichtung umgelenkt. Dabei wirken vom Kettenstück auf das Umlenkstück und umgekehrt Kräfte. Durch diese Kräfte wird das am Befestigungsbolzen beweglich gelagerte Umlenkstück zumindest geringfügig bewegt.

Diese Bewegung des Umlenkstückes wird vom Verbindungsstück auf den Wächter übertragen. Der Wächter übersetzt dann diese übertragene Bewegung und/oder die dabei übermittelte Kraft in ein Signal, welches wiederum zur Steuerung und Regelung des Kettenumlenksystems verwendet wird.

Vorteilhafter Weise ist vorgesehen, dass in dem Wächter eine Feder angeordnet ist und das Umlenkstück über das Verbindungsstück eine Kraft in den Wächter einleitet, die der Federkraft entgegenwirkt. In dieser Ausführungsform ist der Wächter als Kraftmesser ausgeführt. Wie zuvor beschrieben, ist dieser Wächter über ein Verbindungsstück mit dem Umlenkstück gekoppelt. In dem Wächter ist eine Feder so angeordnet, dass diese das Verbindungsstück gegenüber dem Gehäuse des Wächters vorspannt. Dazu drückt oder zieht die eingebaute Feder das Verbindungsstück in eine Richtung. Die Charakteristik, insbesondere Parameter wie Federsteifigkeit, der eingebauten Feder sind bekannt. Wächter, Verbindungsstück und Umlenkstück sind nun so zueinander angeordnet, dass verursacht durch die Bewegung des Kettenstückes um das Umlenkstück eine Kraft auf das Verbindungsstück erzeugt wird, die entgegengesetzt der Federkraft der eingebauten Feder im Wächter gerichtet ist. Die vom Kettenstück erzeugte Kraftwirkt somit in entgegengesetzter Richtung zu der Vorspannung des Verbindungsstückes durch die eingebaute Feder im Wächter. Je größer die vom Kettenstück erzeugte Kraft ist, desto mehr wird die Vorspannkraft kompensiert. Ein derartiges Kettenumlenksystem kann einen sehr einfach aufgebauten Wächter umfassen. Ein solcher einfacher Wächter ist ein einfacher Schalter, der durch die beschriebene Vorspannung geschlossen ist. Ist die durch das Kettenstück erzeugte Kraft schließlich größer als die Vorspannkraft, wird der Schalter geöffnet und dadurch ein binäres Signal im Wächter erzeugt. Alternativ kann der Wächter auch so ausgeführt sein, dass über einen Kraftsensor ein analoges Kraftsignal erzeugt wird, welches beispielsweise Aufschluss über die im Kettenstück vorliegende Kraft geben kann. Eine Vorspannung des Wächters kann wie bereits beschrieben innerhalb des Wächters erfolgen. Alternativ oder zusätzlich dazu kann auch eine Vorspannung des Umlenkstückes oder des Verbindungsstückes außerhalb des Wächters erfolgen. Dazu kann beispielsweise eine oder mehrere Federn zwischen dem Umlenkstück und einem ortsfesten Lagerpunkt angeordnet werden die das Umlenkstück gegen die vom Kettenstück erzeugten Kräfte vorspannt.

Des Weiteren ist in dem Vorschlag vorteilhafter Weise vorgesehen, dass ein berührungslos arbeitender Wächter vorgesehen ist, der die Anwesenheit oder die Belastung des Kettenstücks der Kette prüft. In dieser Ausführungsform ist ein Wächter vorgesehen, der nicht mechanisch mit dem Umlenkstück gekoppelt ist. Stattdessen ist ein berührungslos arbeitender Wächter vorgesehen der unabhängig vom Umlenkstück ist. Aufgrund dieser Unabhängigkeit kann der Wächter zwar an dem Umlenkstück angeordnet sein, kann aber auch an einem völlig anderen Ort angebracht werden. Ein berührungslos arbeitender Wächter hat den Vorteil, dass an ihm kein mechanischer Verschleiß auftritt und somit mit langen Standzeiten zu rechnen ist.

Bei einer bevorzugten Ausgestaltung des Vorschlags ist vorgesehen, dass der berührungslos arbeitende Wächter einen optischen Sensor oder einen berührungslos arbeitender Sensor nach elektromagnetischen Wirkprinzip, insbesondere einen Hall-Sensor aufweist. In dieser Ausführungsform weist der berührungslos arbeitende Wächter einen optischen Sensor auf. Dieser optische Sensor stellt beispielsweise fest, ob eine Lichtquelle durch eine vorhandene Ketteabgedeckt ist. Reißt die Kette, ist die Lichtquelle nicht mehr abgedeckt und der optische Sensor registriert dieses Licht und erkennt dadurch den Kettenbruch. Es können auch optische Sensoren vorgesehen sein, die anders arbeiten, beispielsweise den Kontrast zwischen Kette und deren Hintergrund ermitteln, ohne dass eine zusätzliche Lichtquelle benötigt wird. Alternativ oder zusätzlich können auch elektrisch oder elektromagnetisch arbeitende berührungslose Sensoren vorgesehen sein. So kann beispielsweise ein Hall-Sensor dazu eingesetzt werden, die Anwesenheit einer Metall enthaltenden Kette berührungslos zu prüfen. Generell sind sämtliche berührungslos arbeitende Sensoren und Sensortypen geeignet, um in einem Wächter für ein Kettenumlenksystem eingesetzt zu werden.

Des Weiteren ist vorgesehen, dass das Umlenkstück linear beweglich gegenüber einem feststehenden Wächter angeordnet ist. In dieser Ausführungsform ist statt der zuvor beschriebenen rotatorischen Beweglichkeit des Umlenkstückes eine lineare Beweglichkeit gegenüber einem feststehenden Wächter vorgesehen. Die verschiedenen beschriebenen Ausführungsformen von Wächtern gelten analog für ein linear beweglich angeordnetes Umlenkstück. Die Befestigung eines linear beweglich angeordneten Umlenkstückes gegenüber dem ortsfesten Untergrund kann beispielsweise über Schienen erfolgen.

In einer vorteilhaften Ausgestaltung ist vorgesehen, dass das Kettenumlenksystem mit zwei Umlenkstücken, wobei eines mit einer konvexen und eines mit einer konkaven Fläche, ausgestattet ist und die beiden gebogenen Flächen zusammen einen Spalt bilden, der mindestens so groß wie der Durchmesser der Rollen eines als Rollenkette ausgebildeten Kettenstücks. In dieser Ausführungsform sind zwei Umlenkstücke vorgesehen, die zusammenwirken. Die Krümmung oder Krümmungsrichtung dieser beiden Umlenkstücke ist zueinander komplementär ausgeführt. Die beiden Umlenkstücke sind so angeordnet, dass zwischen deren beiden gebogenen Flächen das Kettenstück im Schiebesitz durchschiebbar ist. Dazu ist der entstehende Schlitz so dimensioniert, dass er geringfügig größer als der Durchmesser der Kettenrollen des als Rollenkette ausgeführten Kettenstücks ausgeführt ist. Vorteilhaft an einem solchen Kettenumlenksystem ist, dass durch eine derartige Anordnung von zwei Umlenkstücken ein Kettenstück sowohl in Druckrichtung als auch in Zugrichtung abgelenkt bzw. umgelenkt werden kann.

Geschickter Weise ist vorgesehen, dass das als plattenförmige Scheibe ausgeführte Umlenkstück quer zur Laufrichtung des Kettenstücks verschiebbar ausgeführt ist. In dieser Ausführungsform ist das plattenförmige Umlenkstück verschiebbar ausgeführt, um Toleranzen im Kettenumlenksystem auszugleichen. Durch eine Verschiebbarkeit des Umlenkstückes kann sich dieses selbst in Laufrichtung des Kettenstückes ausrichten. Bei Kettenumlenksystemen, bei denen das Kettenstück über längere Bereiche, insbesondere über Bereiche mit einer Länge von mehreren Metern geführt wird ist eine untereinander fluchtende Anordnung mehrerer Umlenkstücke schwierig herzustellen. Durch das Vorsehen einer Verschiebbarkeit eines oder mehrerer Umlenkstücke wird erreicht, dass sich diese Umlenkstücke selbst in eine Position ausrichten, in dem die Umlenkung des Kettenstückes unter dem geringsten Widerstand erfolgt.

In einer weiteren bevorzugten Ausführungsform ist vorgesehen, dass zumindest ein ortsfest angebrachter Bolzen vorgesehen ist und das Umlenkstück auf dem Bolzen in zwei Richtungen beweglich gelagert ist, wobei sich der Bolzen über beide Seiten des scheibenförmigen Umlenkstückes hinaus erstreckt. Diese Ausführungsform ist eine besonders einfache Lösung eines quer zur Laufrichtung des Kettenstückes verschiebbaren Umlenkstückes. Die Lagerung des Umlenkstückes auf einem ortsfest angebrachten Bolzen stellt eine konstruktiv einfache Lösung dar. Selbstverständlich kann der Bolzen auch fest im Umlenkstück angeordnet sein und beweglich in einer Lagerung außerhalb des Umlenkstückes geführt werden.

Des Weiteren ist günstiger Weise vorgesehen, dass das Umlenkstück drehbar gelagert ist, wobei eine Achse vorgesehen ist, die der gebogenen Fläche abgewandt am Umlenkstück angeordnet ist und die Achse in einem Gegenstück drehbar gelagert ist. In dieser Ausführungsform ist das Umlenkstück dreh- oder schwenkbar gelagert. Eine solche Lagerung ermöglicht einen Ausgleich gegen eine im Winkel zur Idealrichtung versetzte Positionierung des Umlenkstückes.

Gerade bei Führung eines Kettenstückes über eine längere Distanz kann es nicht ausgeschlossen werden, dass die Umlenkstücke mit einem Winkelfehler zueinander angeordnet werden. Dadurch würde ohne Gegenmaßnahmen ein erhöhter Verschleiß an Kettenstück und Umlenkstücken auftreten. Durch eine drehbare Lagerung des Umlenkstückes wird eine Fehlpositionierung hintereinander angeordneter Umlenkstücke ausgeglichen.

Vorteilhafter Weise ist vorgesehen, dass die Fläche einen konstanten Krümmungsradius aufweist. Diese Ausführungsform ist die Fläche, oder gebogene Fläche mit einem einheitlichen Krümmungsradius konstant gekrümmt.

Des Weiteren ist in dem Vorschlag vorteilhafter Weise vorgesehen, dass die Fläche des Umlenkstücks gerade und gekrümmte Bereiche aufweist. In dieser Ausführungsform verläuft die Fläche, oder gebogene Fläche nicht konstant sondern weist verschiedene Bereiche auf. Dabei können diese Bereiche unterschiedliche Krümmungsradien aufweisen oder auch gerade, bzw. plan ausgeführt sein. Durch abwechselnden oder sich verändernden Krümmungsradius um ein Umlenkstück herum können die Eigenschaften des Umlenkstückes an den gegebenen Anwendungsfall angepasst werden. So ist es beispielsweise günstig, zumindest zwei gekrümmte Bereiche der Fläche vorzusehen, die an zwei Seiten eines geraden Bereiches angeordnet sind um ein Kettenstück um Winkel größer als 90° abzulenken. Selbstverständlich sind auch Umlenkstücke mit mehreren gekrümmten und mehreren geraden Bereichen der Fläche denkbar.

Bei einer bevorzugten Ausgestaltung des Vorschlags ist vorgesehen, dass zumindest ein Krümmungsradius der Fläche des Umlenkstückes so ausgeführt ist, dass mehrere Rollen des als Rollenkette ausgeführten Kettenstücks auf der Fläche aufliegen. In dieser Ausführungsform ist der Krümmungsradius der Fläche oder der gebogenen Fläche so groß gewählt, dass mehrere Rollen der Rollenkette hintereinander auf dieser Fläche aufliegen. Dadurch wird die Auflagefläche des Kettenstückes auf dem Umlenkstück vergrößert und der Verschleiß bei der Führung des Kettenstückes reduziert. Je mehr Kettenrollen auf dem Umlenkstück aufliegen desto geringer ist der Verschleiß des Kettenumlenksystems.

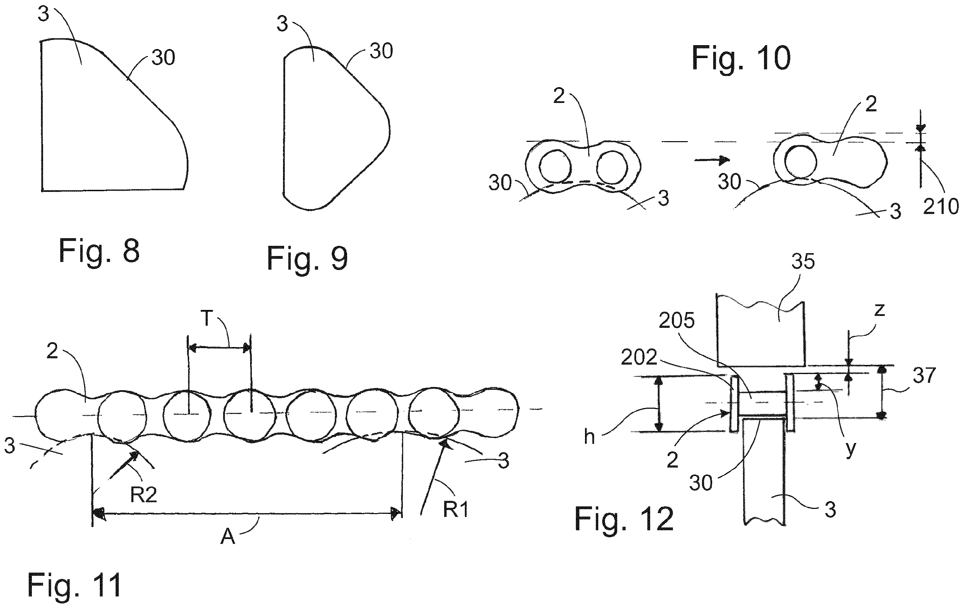

Des Weiteren ist vorgesehen, dass zwei Umlenkstücke vorgesehen sind und das Kettenstück nacheinander über beide Umlenkstücke geführt ist, wobei die höchsten Punkte der Umlenkstücke einen Abstand A zueinander aufweisen und dieser Abstand so ausgeführt ist, dass er vorzugsweise nicht einem geraden Vielfachen der Teilung T des Kettenstücks entspricht. Wenn mehrere Umlenkstücke in Laufrichtung des Kettenstückes hintereinander angeordnet sind, kann ein aufschwingendes Kettenstückes auftreten, welches in der Beschreibung zu Fig. 11 genauer dargestellt ist. Dieses Aufschwingen wird in einer Ausführungsform verringert oder verhindert, indem zwei aufeinanderfolgende Umlenkstücke in einem bestimmten Abstand A zueinander angeordnet sind. Dieser Abstand A wird dabei bewusst so gewählt, dass er nicht einem geraden Vielfachen der Teilung T des Kettenstücks entspricht. Unter der Teilung T ist der Achsabstand zwischen zwei aufeinanderfolgenden Kettenrollen zu verstehen. Der Abstand A ist dabei als der Abstand definiert, welcher zwischen den jeweils höchsten Punkten benachbart angeordneter Umlenkstücke entsteht. Durch dieses Verhältnis zwischen Abstand A und Teilung T ist sichergestellt, dass die Bewegung quer zur Laufrichtung des Kettenstückes an zwei benachbarten Umlenkstücken asynchron zueinander ist, wodurch einem Aufschwingen des Kettenstückes entgegengewirkt wird.

In einer vorteilhaften Ausgestaltung ist vorgesehen, dass zwei Umlenkstücke vorgesehen sind und das Kettenstück nacheinander über beide Umlenkstücke geführt ist, und die beiden Flächen unterschiedliche Krümmungsradien aufweisen. Dieser Ausführungsform sind zwei Umlenkstücke in Kettenlaufrichtung hintereinander angeordnet die unterschiedliche Krümmungsradius der gebogenen Flächen aufweisen. Auch durch solche unterschiedlichen Krümmungsradius wird eine synchrone Bewegung des Kettenstückes quer zur Laufrichtung verhindert und somit die Gefahr des aufschwingen des Kettenstückes reduziert.

Geschickter Weise ist vorgesehen, dass das Kettenumlenksystem Teil des Hubmittels ist und zum Beispiel mit dem Hubantrieb, zum Beispiel einem Elektromotor, Hydraulikmotor oder einem Hubzylinder zusammenwirkt. In dieser Ausführungsform ist das Kettenumlenksystem Bestandteil eines Hubmittels. Ein weiterer Bestandteil dieses Hubmittels kann beispielsweise ein Hubantrieb sein, der günstigerweise als Motor ausgeführt ist.

Die Erfindung umfasst eine Autoparkvorrichtung mit einem Gestell, an dem zumindest eine bewegbare, insbesondere anheb- oder absenkbare Plattform vorgesehen ist und die Autoparkvorrichtung mit einer Kette ausgestattet ist, die mindestens teilweise Teil eines Kettenumlenksystem, wie beschreiben, ist, wobei das jeweilige Umlenkstück am Gestell oder an der Plattform angeordnet ist. Eine erfindungsgemäße Parkvorrichtung umfasst zumindest ein Kettenumlenkystem nach einer der zuvor beschriebenen Ausführungsformen. Die Kette der Autoparkvorrichtung entspricht dabei dem Kettenstück des Kettenumlenksystems. Günstiger Weise umfasst eine erfindungsgemäße Autoparkvorrichtung ein Kettenumlenksystem mit mehreren Umlenkstücken, wobei das Kettenstück mehrmals in seiner Laufrichtung abgelenkt wird.

Des Weiteren ist in dem Vorschlag vorteilhafter Weise vorgesehen, dass das Kettenumlenksystem als Gleichlaufeinheit dient und dabei insbesondere dafür sorgt, dass die jeweiligen gegenüberliegenden Plattformenden oder -Seiten, wo die Kettenumlenksysteme an der Plattform angeordnet sind, mit gleicher Geschwindigkeit angehoben oder abgesenkt werden, um so ein Verkanten der Plattform in dem Gestell bzw. der Hubanordnung zu vermeiden und so einen möglichst ausfallfreien Betrieb der Autoparkvorrichtung zu ermöglichen. Eine sogenannte Gleichlaufeinheit ermöglicht es, die Bewegung eines Hubantriebes zu oder auf andere Seiten der der sich bewegenden Plattform zu übertragen. Mit einem Kettenumlenksystem mit einem oder mehreren Umlenkstücken kann passiv die Bewegung eines asymmetrisch zur Plattform angeordneten Hubantriebs an andere Stellen der Plattform übertragen werden. Durch eine solche Übertragung werden weniger Hubantriebe benötigt, wodurch die gesamte Parkverrichtung kostengünstiger und ausfallsicherer wird. Unter einer passiven Übertragung der Bewegung ist dabei zu verstehen, dass keine Drehmomente über Achsen oder Wellen übertragen werden. Im Stand der Technik existieren Gleichlaufvorrichtungen, welche über Wellen verbundene Zahnräder oder Ritzel aufweisen die aktiv Drehmoment von einem Kettenstück auf ein anderes Kettenstück übertragen. Durch das Vorsehen von erfindungsgemäßen Umlenkstücken ist eine solche aktive Drehmomentübertragung nicht möglich, da diese Umlenkstücke ja keine Verzahnung aufweisen, die in Eingriff mit den Kettenrollen stehen. Eine andere Bezeichnung für ein Gleichlaufsystem, welches passiv Zug- oder Druckkräfte in einem Kettenstück überträgt ist Gleichhubvorrichtung. Üblicherweise ist rechts und links an der beweglichen Plattform jeweils ein Hubantrieb vorgesehen. Dessen Hubbewegung wird nach vorne und nach hinten gleichmäßig durch ein erfindungsgemäßes Kettenumlenksystem übertragen. Ein erfindungsgemäßes Kettenumlenksystem ist jedoch nicht auf die Verwendung in einer Autoparkvorrichtung beschränkt.

Bei einer bevorzugten Ausgestaltung des Vorschlags ist vorgesehen, dass das Kettenumlenksystem Teil des Hubmittels ist und zum Beispiel mit dem Hubantrieb, zum Beispiel einem Elektromotor, Hydraulikmotor oder einem Hubzylinder zusammenwirkt.

Bei einer bevorzugten Ausgestaltung des Vorschlags ist vorgesehen, dass die Länge der Fläche des Umlenkstücks, bezogen auf die realisierte Richtungsänderung der durch die Kette übertragenden Kraftrichtung von 5° bis zum Beispiel 720° beträgt.

Des Weiteren ist vorgesehen, dass die Fläche des Umlenkstücks schraubenförmig ausgebildet ist.

Des Weiteren ist vorgesehen, dass die Fläche des Umlenkstücks konvex oder konkav gebogen ist.

In einer vorteilhaften Ausgestaltung ist vorgesehen, dass das Umlenkstück schwenkbar oder längsbeweglich gelagert ist. Die Anordnung ist dabei so gewählt, dass keine unendliche drehbare Lagerung des Umlenkstückes vorgesehen ist.

Geschickter Weise ist vorgesehen, dass das Umlenkstück mit einem Wächter, zum Beispiel ein Kraftwächter oder einem Kettenbruchwächter verbunden ist.

In einer weiteren bevorzugten Ausführungsform ist vorgesehen, dass das Kettenumlenksystem mit zwei Umlenkstücken, eines mit einer konvexen und eines mit einer konkaven Fläche, ausgestattet ist.

Des Weiteren ist günstiger Weise vorgesehen, dass die Fläche eine Dicke oder Höhe besitzt, die geringfügig kleiner ist wie der innere Abstand der gegenüberliegenden Innenlaschen der als Rollenkette ausgebildeten Kette.

In diesem Zusammenhang wird insbesondere darauf hingewiesen, dass alle in Bezug auf das Kettenumlenksystem beschriebenen Merkmale und Eigenschaften aber auch Verfahrensweisen sinngemäß auch bezüglich der Formulierung der Ansprüche für die erfindungsgemäßen vorgeschlagene Autoparkvorrichtung übertragbar und im Sinne der Erfindung einsetzbar und als mitoffenbart gelten. Gleiches gilt auch in umgekehrter Richtung, das bedeutet, nur in Bezug auf die Autoparkvorrichtung genannte, bauliche also vorrichtungsgemäße Merkmale können auch im Rahmen der Ansprüche für das Kettenumlenksystem berücksichtigt und beansprucht werden und zählen ebenfalls zur Offenbarung.

In der Zeichnung ist die Erfindung insbesondere in einem Ausführungsbeispiel schematisch dargestellt. Es zeigen:
Figur 1a, 2a, je in einer dreidimensionalen Ansicht verschiedene Ausführungsbeispiele der erfindungsgemäßen Auto-parkvorrichtung,
Figur 1b, 2b je in einem vertikalen Schnitt in Querrichtung die erfindungsgemäße Autoparkvorrichtung nach Figur 1a, 2a,
Figur 3a,3b,3c je in einer Detailansicht verschiedene Ausführungsbeispiele des erfindungsgemäßen Ketten-umlenksystems,
Figur 4 in einer teilweisen Schnittdarstellung ein Detail des Kettenstücks des erfindungsgemäßen Kettenum-lenksystems,
Figur 5 in einer Detailansicht ein weiteres Ausführungsbeispiel des erfindungsgemäßen Kettenumlenksystems,
Figur 6a, 6b, 6c in einer Seitenansicht und zwei Draufsichten ein weiteres Ausführungsbeispiel des erfindungsge-mäßen Kettenumlenksystems,
Figur 7a, 7b, 7c, 7d in zwei Seitenansichten, einer Draufsicht und einer Frontalansicht ein weiteres Aus-führungsbeispiel des erfindungsgemäßen Kettenum-lenksystems,
Figur 8 in einer Seitenansicht ein weiteres Ausführungsbeispiel des erfindungsgemäßen Kettenumlenksystems,
Figur 9 in einer Seitenansicht ein weiteres Ausführungsbeispiel des erfindungsgemäßen Kettenumlenksystems,
Figur 10 in einer Seitenansicht schematisch den Effekt des Aufschwingens einer Kette,
Figur 11 in einer Seitenansicht ein Ausführungsbeispiel des erfindungsgemäßen Kettenumlenksystems mit Verbes-serungen gegen das Aufschwingen der Kette,
Figur 12 in einer Frontalansicht ein weiteres Ausführungsbeispiel des erfindungsgemäßen Kettenumlenksystems mit einem Niederhalter.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

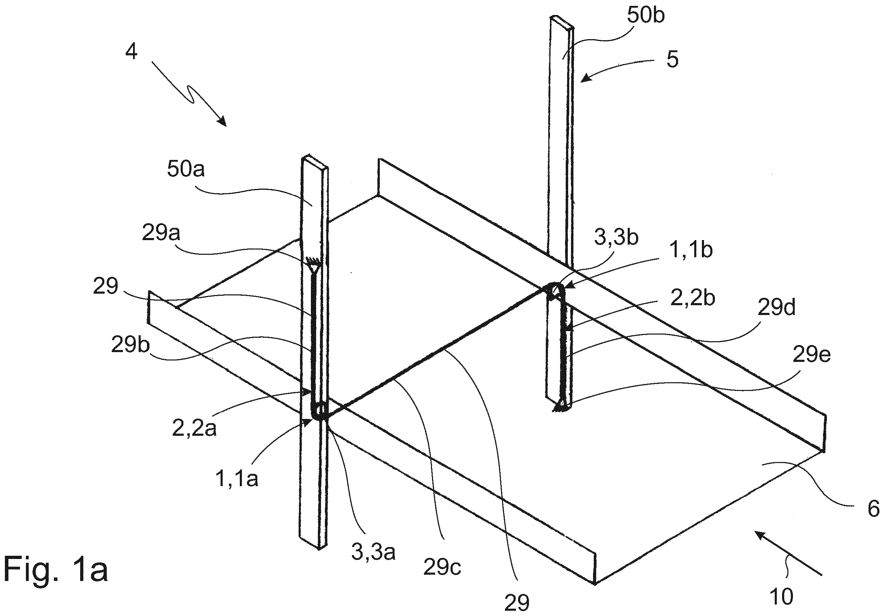

In Figur 1a ist eine erfindungsgemäße Autoparkvorrichtung 4 schematisch dargestellt. Aufgrund der Übersichtlichkeit ist diese Darstellung auf die notwendigen Elemente reduziert, diese Darstellung und die Beschreibung dieses Ausführungsbeispiels beschränkt aber in keiner Weise den Einsatz der vorgeschlagenen Erfindung. Typischerweise besteht eine Autoparkvorrichtung 4 aus einem Gestell 5, an dem zumindest eine bewegbare Plattform 6 vorgesehen ist. Für die Bewegung der Plattform 6, insbesondere ihre Anheb- oder Absenkbewegung ist ein Antrieb, zum Beispiel ein hydraulisch wirkender Arbeitszylinder, Hydraulikmotor oder einen Elektroantrieb vorgesehen, aber hier nicht gezeigt.

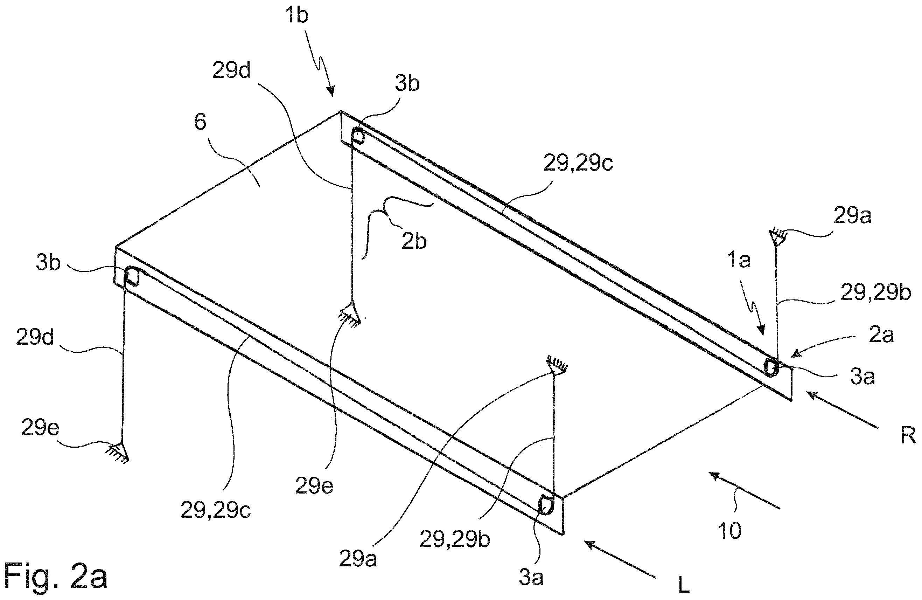

Es sei auch angemerkt, dass die Plattform 6 "durchsichtig" ausgeführt ist, das heißt die unter der Plattform 6 verlaufenden Elemente, also von der Plattform 6 verdeckten Elemente, sind in voller Strichstärke gezeigt. Die gleiche Darstellung ist auch in Figur 2a gewählt.

Die in Figur 1a (und auch Figur 2a) gezeigte Autoparkvorrichtung ist mit nur einer Plattform 6 ausgestattet, ohne aber die Erfindung hierauf zu beschränken. Natürlich ist der Anwendungsbereich der Erfindung auf die Anzahl der Plattformen 6 nicht beschränkt.

Auch das Gestell 5 ist hier nur schematisch dargestellt und besteht idealerweise nur aus zwei im Wesentlichen vertikal orientierten Stützen 50 a und 50 b. Diese schematische Darstellung des Gestells 5 genügt zur Erläuterung des erfindungsgemäßen Effektes. Es sind natürlich auch Varianten von Autoparkverrichtungen 4 bekannt, die aufwändigere Gestellanordnungen besitzen oder selbst nur mit diesen zwei gezeigten Stützen 50a, 50b realisiert sind. All diese Varianten zählen zu der Erfindung.

In dem in Figur 1a gezeigten Ausführungsbeispiel wird die Kette 29 über zwei Umlenkstück 3a, 3b, die sich an der Plattform 6 befinden, umgelenkt. Dabei verläuft die Kette 29 von einem oberen Festlegungspunkt 29a, der sich an der ersten Stütze 50a befindet zunächst in einem ersten, vertikal verlaufenden Abschnitt 29b vertikal nach unten bis es in dem ersten Umlenkstück 3a nach links, in die Horizontale umgelenkt wird. Der horizontal verlaufende Abschnitt 29c verläuft dabei bevorzugt unterhalb der Plattform 6 und ist daher von dieser geschützt.

Der erste, vertikale Abschnitt 29b und der horizontale Abschnitt 29c bilden dabei das Kettenstück 2a, das zusammen mit dem Umlenkstück 3a ein erstes Kettenumlenksystem 1,1a ergibt.

Die Kette 29 wird in dem in Figur 1a gezeigten Ausführungsbeispiel, in Fahrtrichtung 10 gesehen, von links, an dem Umlenkstück 3a, nach rechts, zu dem Umlenkstück 3b geführt. Der horizontale Abschnitt 29c ist daher rechtwinklig zur Fahrtrichtung 10 orientiert, wobei die Fahrtrichtung 10 die Befahrrichtung der Plattform 6 zum Ein- und Ausparken eines Fahrzeuges beschreibt.

Der horizontale Abschnitt 29c wird in dem rechten, zweiten Umlenkstück 3b wiederum bevorzugt rechtwinklig in die Vertikale abgelenkt und bildet dort das zweite, vertikal verlaufende Kettenstück 29d, dass in dem zweiten, unterem Festlegungspunkt 29e, der sich an der zweiten Stütze 50b befindet, festgelegt ist.

Der zweite, vertikale Abschnitt 29d und der horizontale Abschnitt 29c bilden dabei das zweite Kettenstück 2b, das zusammen mit dem Umlenkstück 3b das zweite Kettenumlenksystem 1,1b ergibt.

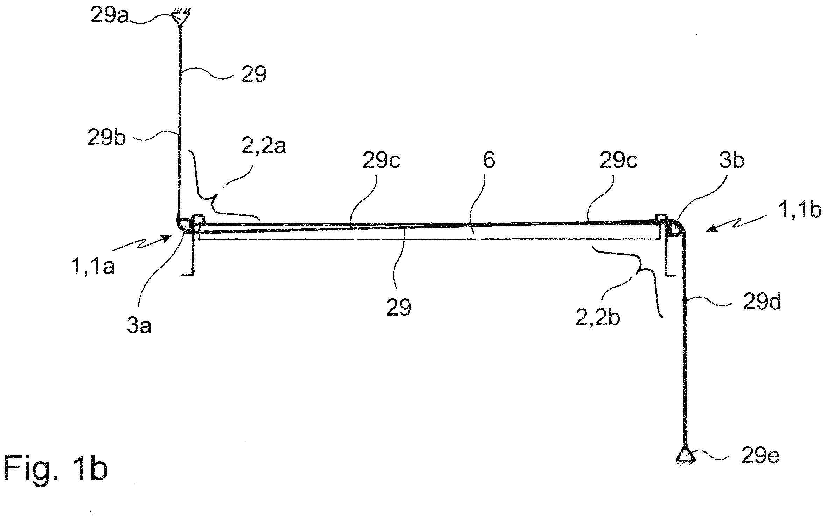

Figur 1b beschreibt in Richtung der Befahrrichtung 10 einen vertikalen Schnitt gemäß Figur 1a. Es ist gut zu erkennen, dass der obere Festlegungspunkt 29a über dem unteren Festlegungspunkt 29e angeordnet ist.

Auch in dem in Figur 2a gezeigten Ausführungsbeispiel wird die Kette 29 über zwei Umlenkstück 3a, 3b, die sich an der Plattform 6 befinden, umgelenkt. Allerdings sind hier in Befahrrichtung 10 gesehen je eine Kette 29 auf der linken (mit L gekennzeichnet) und auf der rechten Seite (mit R gekennzeichnet) vorgesehen. Der Verlauf der Kette 29 ist hierbei nur für eine der Seiten beschrieben, die andere Seite ist hierzu identisch ausgebildet.

Dabei verläuft die Kette 29 von einem oberen Festlegungspunkt 29a, der sich an einer nicht gezeigten Stütze oder dem Bauwerk befindet zunächst in einem ersten, vertikal verlaufenden Abschnitt 29b vertikal nach unten bis es in dem ersten Umlenkstück 3a nach links, in die Horizontale umgelenkt wird. Der horizontal verlaufende Abschnitt 29c verläuft dabei parallel zu, bevorzugt unterhalb der Plattform 6 und ist daher von dieser geschützt.

Der erste, vertikale Abschnitt 29b und der horizontale Abschnitt 29c bilden dabei das Kettenstück 2a, das zusammen mit dem Umlenkstück 3a ein erstes Kettenumlenksystem 1,1a ergibt.

Die Kette 29 wird in dem in Figur 2a gezeigten Ausführungsbeispiel, in Fahrtrichtung 10 gesehen von vorne, an dem Umlenkstück 3a, nach hinten, zu dem Umlenkstück 3b geführt. Der Kettenabschnitt 29c ist parallel zur Befahrrichtung 10 orientiert.

Der horizontale Kettenabschnitt 29c wird in dem rechten, zweiten Umlenkstück 3b, wiederum bevorzugt rechtwinklig, in die Vertikale abgelenkt und bildet dort das zweite, vertikal verlaufende Kettenstück 29d, das in dem zweiten, unterem Festlegungspunkt 29e festgelegt ist.

Der zweite, vertikale Abschnitt 29d und der horizontale Abschnitt 29c bilden dabei das zweite Kettenstück 2b, das zusammen mit dem Umlenkstück 3b das zweite Kettenumlenksystem 1,1b ergibt.

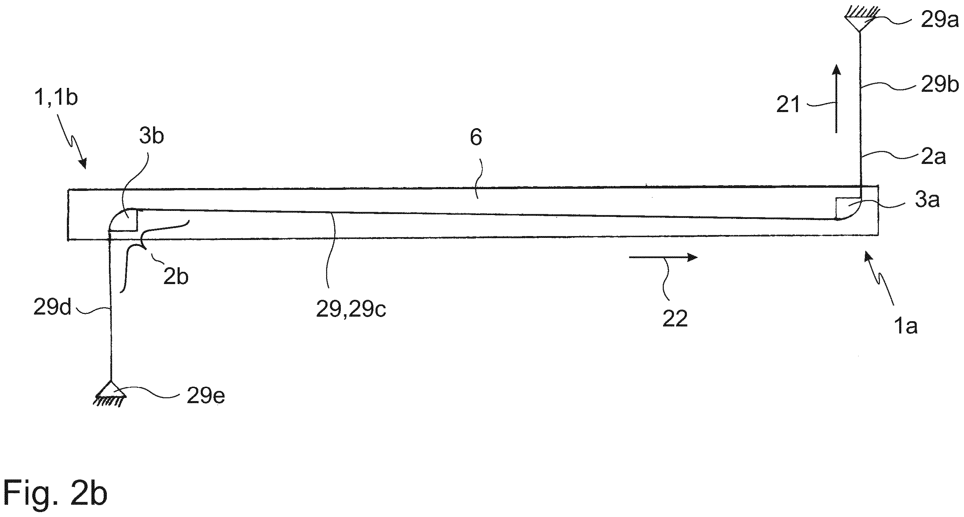

Figur 2b beschreibt in Richtung rechtwinklig zur Befahrrichtung 10 einen vertikalen Schnitt gemäß Figur 2a. Es ist gut zu erkennen, dass der obere Festlegungspunkt 29a über dem unteren Festlegungspunkt 29e angeordnet ist.

In Figur 2b ist mit den Pfeilen 21 und 22, die jeweils parallel zu den jeweiligen Kettenabschnitten 29b bzw. 29c orientiert sind, die Kraftrichtungen, hier insbesondere die Richtungen der Zugkräfte der jeweiligen Kettenabschnitte 29b und 29c angedeutet. In dem hier gezeigten Ausführungsbeispiel, wie aber auch in den anderen Ausführungsbeispielen nach Figur 1a, 1b und 2a bewirkt das Umlenkstück 3, 3a, 3b des Kettenumlenksystem 1, 1a, 1b eine Ab- oder Umlenkung der Kraftrichtungen 21, 22.

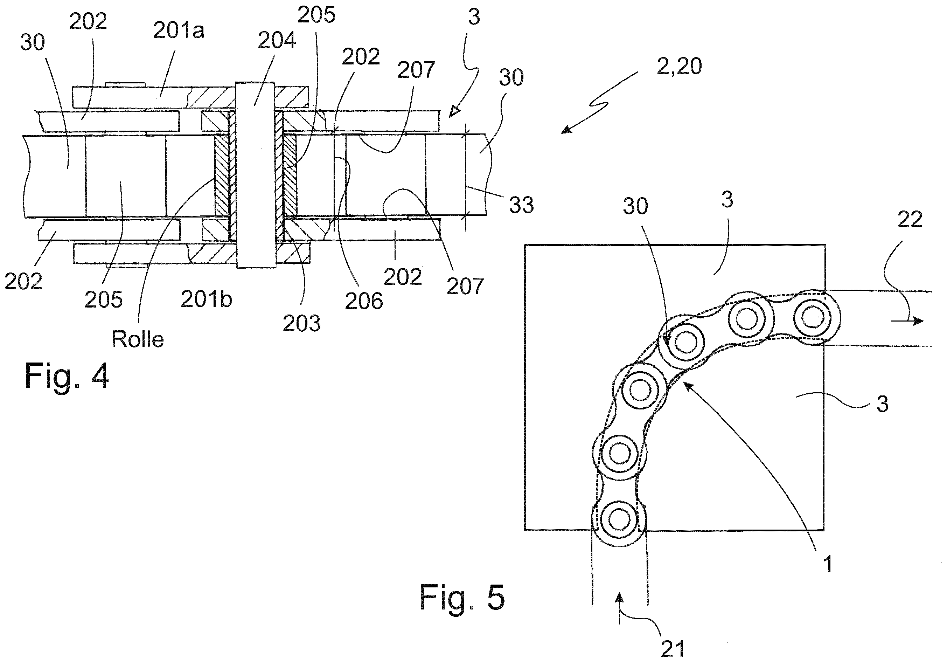

Üblicherweise werden mit einem Kettenstück des Kettenumlenksystems Zugkräfte übertragen. Ohne aber die Erfindung hierauf zu beschränken, ist es auch möglich, mit einem entsprechend ausgebildeten Umlenkstück, auch Druckkräfte abzulenken. Bei diesen befindet sich die Fläche 30 dann nicht radial innen, sondern radial außen (vergleiche Figur 5) in dem sich das Kettenstück hineinschmiegt und abrollt.

Das erfindungsgemäß vorgesehene Kettenumlenksystem 1 ist in dem in Figur 1a, 1b, 2a, 2b, gezeigten Ausführungsbeispiel in einer ebenfalls zur Erfindung zählenden Autoparkvorrichtung 4 realisiert. Es dient hierbei zum Beispiel als Gleichlaufeinheit oder Gleichhubeinheit wobei entlang der Kette 29 jeweils zwei Kettenumlenksysteme 1, 1a, 1b vorgesehen sind. Charakteristisch für den Anwendungsfall einer Gleichlaufeinheit ist dabei, dass die Enden der Kette 29 am Gestell 5 oder am Bauwerk in den jeweiligen Festlegungspunkten 29a bzw. 29e festgelegt sind, also nicht offen sind.

Dies beschränkt aber die Erfindung nicht auf diesen Anwendungsfall. Das erfindungsgemäß vorgeschlagene Kettenumlenksystem ist auch in anderen Fällen realisierbar und einsetzbar, auch in erfindungsgemäßen Autoparkvorrichtungen 4, bei welchen das Kettenende frei ist. Ebenso ist vorgesehen, dass das erfindungsgemäße Kettenumlenksystem 1 in einem Hebemittel zum Anheben oder Absenken einer Plattform wie zum Beispiel in einer erfindungsgemäßen Autoparkvorrichtung 4 eingesetzt wird.

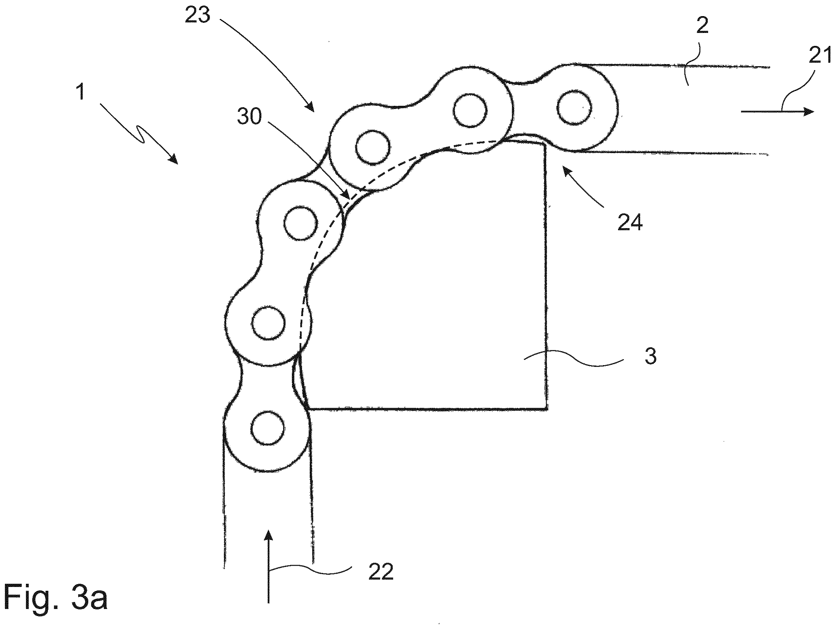

In Figur 3a ist ein erstes Ausführungsbeispiel des erfindungsgemäßen Kettenumlenksystem 1 gezeigt. Das erfindungsgemäße Kettenumlenksystem 1 besteht aus einem Kettenstück 2, bevorzugt einer Rollenkette 20 (wie sie insbesondere in Figur 4 noch genauer beschrieben wird) und einen Umlenkstück 3, das eine gebogene Fläche 30 aufweist.

Das Umlenkstück 3 ist zum Beispiel als ein 90° Segment einer plattenförmigen Scheibe mit einer gewissen Plattenstärke oder Dicke 33 ausgebildet, wobei die Länge des Winkelsegments die Erfindung nicht beschränkt. Die Länge der Fläche 30 (in Kraftrichtung 21, 22 gesehen), kann, bezogen auf das jeweilige Segment, von 5° bis 360° betragen und selbst darüber hinaus (zum Beispiel bis zu 540° oder 720°) ausgeführt sein, wobei zum Beispiel bei Segmenten über 180° bevorzugt eine schraubenförmige Gestaltung der Fläche 30 günstig ist.

Die Erfindung offenbart an dieser Stelle Segmente im 5° Abstand, das bedeutet, die Fläche 30 des Umlenkstücks 3 ist in 5 Grad-Schritten des Winkelsegments der Ablenkung beschrieben und ist so in der Form von 5°, 10°, 15° usw. bis 360°, 540° oder 720° offenbart.

In dem in Figur 3a gezeigten Ausführungsbeispiel werden über die Kette 2 Zugkräfte 21, 22 übertragen. Daher befindet sich das Umlenkstück 3 in dem sich bildenden Bogen 23 der Kette 2 auf der radialen Innenseite 24.

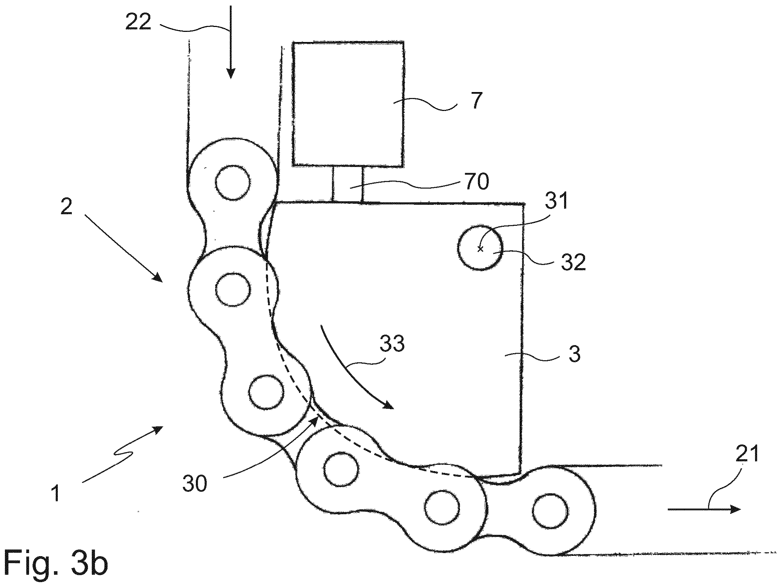

Der Aufbau des Kettenumlenksystems 1 nach Figur 3b ist dem Ausführungsbeispiel nach Figur 3a sehr ähnlich, es werden daher hier nur die Unterschiede beschrieben.

In Figur 3a ist das Umlenkstück 3 unbeweglich, fest, zum Beispiel an dem Gestell 5 oder der Plattform 6 angeordnet. In dem Ausführungsbeispiel nach Figur 3b besitzt das Umlenkstück 3 eine gewisse, eng begrenzte Beweglichkeit. Hierzu ist ein Befestigungsbolzen 32 vorgesehen, der eine gewisse beschränkte Bewegung des Umlenkstück 3 ist um die Drehachse 31 des Befestigungsbolzens 32 zulässt. Das Umlenkstück 3 ist über das Verbindungsstück 70 mit einem Wächter 7 verbunden. Der Wächter 7 ist zum Beispiel ein Kettenbruchwächter oder ein Kraftwächter.

Nachfolgend wird die Funktionsweise des Wächters 7 beschrieben.

Die Bewegung des Kettenstücks 2, entsprechend den Zugrichtungen 21, 22, führt zu einer Bewegung des Umlenkstück 3 entgegen der Uhrzeigerrichtung um die Drehachse 31, dargestellt durch den Pfeil 33. Dadurch bewegt sich das Umlenkstück 3 von dem Wächter 7 weg, es wirkt eine Kraft auf das Verbindungsstück 70, die dieses aus dem Wächter 7 herausziehen möchte. In dem Wächter 7 ist hierzu eine entsprechende Feder angeordnet, die eine Federkraft zur Verfügung stellt, die diese Kraft entgegenwirkt.

Die Folge dieser Anordnung ist nun diese, dass bei ordnungsgemäßen Funktionieren des Kettenumlenksystem eine Kraft wirkt, die versucht, das Verbindungsstück 70 aus dem Wächter 7 gegen die Kraft einer internen Feder des Wächters 7 zu bewegen. Wird nun dieser Zustand gestört, zum Beispiel weil die Kette 2 bricht oder reißt, dann fällt die Gegenkraft der internen Feder des Wächters 7 weg, und dieses Fehlverhalten kann zum Beispiel durch einen entsprechenden Schalter entdeckt und angezeigt werden. Vorteilhafter Weise umfasst somit das erfindungsgemäß vorgesehene Kettenumlenksystem auch gleichzeitig eine Wächterfunktion!

Dabei kann mit diesem Wächter 7 nicht nur der Kettenbruch detektiert werden, in einer alternativen Ausgestaltung ist es auch möglich, dass die auf die Kette 2 wirkende Kraft, eine Zug- oder auch eine Druckkraft, mit dem Wächter 7 gemessen wird und der Anlagensteuerung, zum Beispiel einer Autoparkvorrichtung oder einer anderen Anlage, zu Kontroll- und Überwachungszwecken zugeleitet wird. Alternativ kann der Wächter 7 auch berührungslos ausgeführt sein. Ein solcher, berührungslos arbeitender Wächter 7 weist keine feste, körperliche Verbindung zum Umlenkstück 3 auf. Ein berührungslos arbeitender Wächter 7 kann beispielsweise einen optischen Sensor aufweisen und damit die Anwesenheit oder Belastung der Kette prüfen. Ebenso kann ein berührungsloser Sensor nach elektromagnetischen Wirkprinzip zum Einsatz kommen, z.B. ein Hall Sensor. Erfindungsgemäß können sowohl berührungslos als auch das Umlenkstück 3 berührende Wächter 7 zum Einsatz kommen. So können frühzeitige entsprechende Überlastsituationen der Anlage festgestellt werden.

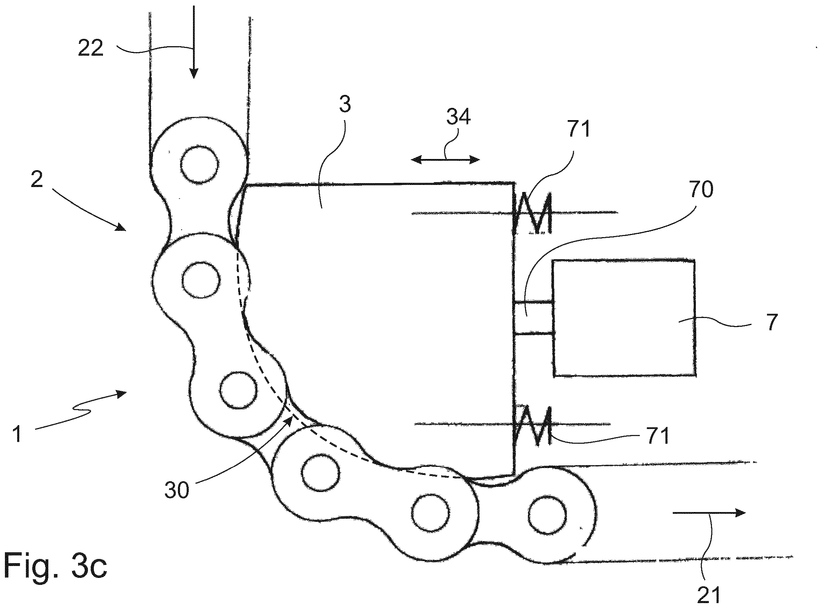

Figur 3c ist dem Ausführungsbeispiel nach Figur 3b sehr ähnlich. Auch hier werden, um redundante Wiederholungen zu vermeiden, nur auf die Unterschiede hingewiesen. In Figur 3b war eine relative Beweglichkeit des Umlenkstücks 3 um eine Drehachse 31 vorgesehen. In dem Ausführungsbeispiel nach Figur 3c ist eine lineare Beweglichkeit (durch den Doppelpfeil 34 angedeutet) des Umlenkstückes 3 gegenüber dem feststehenden Wächter 7 vorgesehen. Gut zu erkennen sind in der schematischen Ansicht die beiden Rückstellfedern 71, die gegen die nach rechts orientierte Kraft wirkt, die ihrerseits bei normalen Betrieb der auf Zug ausgerichteten Kettenanordnung (siehe Richtung der Zugkräfte 21,22) wirken. Wiederum ist das Umlenkstück 3 über das Verbindungsstück 70 mit dem Wächter verbunden. Die Funktionsweise des Wächters 7 ist hier wieder die gleiche, wie bei Figur 3b beschrieben.

Neben einer konkaven Ausgestaltung der Fläche 30 des Umlenkstückes 3, wie sie zum Beispiel in den Figuren 3a, 3b und 3c gezeigt ist, ist es auch möglich, ein Umlenkstück 3 mit einer konvex gestalteten Fläche 30 vorzusehen. Auch eine solche Variante gehört zur Erfindung. Geschickter Weise ist es möglich, mithilfe eines Umlenkstückes 3 mit einer konvexen Fläche 30 unter Druckkräften stehende Ketten umzulenken.

Das Kettenumlenksystem 1 ist aber in einer weiteren Variante auch so auszubilden, dass damit sowohl Ketten, die unter Zug- wie auch unter Druckkräfte stehen, umgelenkt werden könnten. Eine solche Ausführungsform ist in Figur 5 zu sehen. Hierbei wird das Kettenumlenksystem um ein weiteres Umlenkstück 3 ergänzt, der Art, dass ein erstes Umlenkstück 3 mit einer konkaven Fläche 30 und ein zweites Umlenkstück 3 mit einer konvexen Fläche 30 angeordnet ist, und die beiden Flächen 30 einander zugewandt sind und einen Spalt bilden, in dem das Kettenstück 2 Platz findet. Dabei ist der Abstand der beiden Flächen 30 mindestens so groß, wie der Durchmesser der Rollen des Kettenstücks 2. Eine solche Dimensionierung stellt sicher, dass sich die Rollen der Rollenkette 2 je nach Kräfteverhältnisse zuverlässig nur auf einer der Flächen 30 abrollen. Das in Figur 5 rechts unten dargestellte Umlenkstück 3 entspricht dabei den zuvor, beispielsweise in Figur 3 beschriebenen Umlenkstücken 3 und führt das Kettenstück 2, wenn dieses unter Zugspannung steht. Links oben ist ein weiteres Umlenkstück 3 dargestellt, dessen gekrümmte Fläche 30 komplementär zu der gekrümmten Fläche 30 des anderen Umlenkstückes 3 ausgebildet ist. Zwischen den beiden gekrümmten Flächen 30 besteht ein Spalt, dessen Breite etwas größer als der Außendurchmesser der Rollen 205 des Kettenstückes 2 ist. Das Kettenstück 2 kann so mit leichter Spielpassung durch den Spalt gleiten. Befindet sich das Kettenstück 2 unter Zugspannung, liegen dessen Rollen 205 auf der gekrümmten Fläche 30 des rechts unten dargestellten Umlenkstückes 3 an, zwischen den Rollen 205 und der gekrümmten Fläche des links oben angeordneten Umlenkstückes 3 besteht ein kleiner Abstand. Wird das Kettenstück dagegen geschoben, liegen die Rollen 205 an dem links oben dargestellten Umlenkstück 3 an und zwischen den Rollen 205 und dem rechts unten dargestellten Umlenkstück 3 besteht Spiel. Die in Figur 5 gezeigte Ausführungsform mit zwei Umlenkstücken 3 ist somit geeignet, ein Kettenstück 2 sowohl unter Zugspannung als auch im Schubbetrieb abzulenken. Diese Ausführungsform ist weiterhin geeignet, ein ungewolltes Abspringen des Kettenstückes 2 von einem der beiden Umlenkstücke 3 zu verhindern. Das jeweils gegenüberliegende Umlenkstück 3 verhindert, dass das Kettenstück 2 den Spalt zwischen den beiden Umlenkstücken 3 verlässt.

In Figur 4 ist ein Detail des erfindungsgemäßen Kettenumlenksystem 1 gezeigt. Die Blickrichtung ist dabei radial oder rechtwinklig auf die Fläche 30 gerichtet und Teile der Kette 2 sind aufgebrochen gezeigt. Der Aufbau des Kettenstücks 2, das insbesondere als Rollenkette 20 ausgebildet ist, ist wie üblich. Die Innenlaschen 202 sitzen auf einer hier als Hülse 203 bezeichneten Buchse, die sich auf dem Bolzen 204 befindet. Die Außenlaschen 201 sitzen direkt auf dem Bolzen 204. Zwischen den Innenlaschen 202 befindet sich eine Rolle 205 auf der Hülse 203. Die Kette 2 rollt über die Rollen 205 auf der Fläche 30 ab. Die Fläche 30 besitzt eine Dicke 33, die geringfügig kleiner ist wie der innere Abstand 206 der gegenüberliegenden Innenlaschen 202.

Die Folge dieser Dimensionierung ist, dass die Rollenkette 2,20 mit den jeweiligen Innenseiten 207 der Innenlaschen 206 auf dem Umlenkstück 3 zuverlässig (da, durch Formschluss) geführt ist.

Natürlich ist es möglich die Erfindung auch mit einer Duplexkette oder einer Mehrfachkette zu realisieren das Umlenkstück 3 ist dann entsprechend anzupassen.

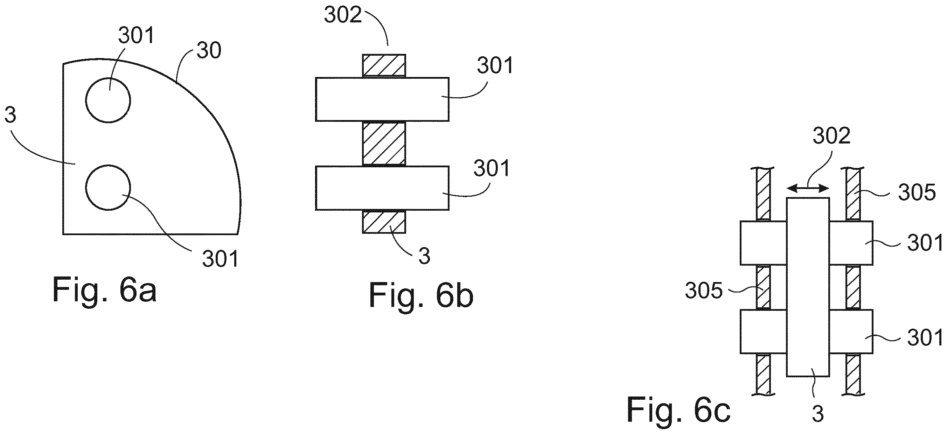

Figur 6a, 6b, 6c zeigt in einer Seitenansicht und zwei Draufsichten ein weiteres Ausführungsbeispiel des erfindungsgemäßen Kettenumlenksystems. Fig. 6a zeigt in einer Seitenansicht ein Umlenkstück 3 welches Teil eines Kettenumlenksystems ist. Eine Kette ist der besseren Übersichtlichkeit halber nicht dargestellt. Zur Führung und Umlenkung der Kette ist die gerundete Fläche 30 vorgesehen, das Zusammenspiel von Kette und Umlenkstück 3 ist dabei wie in Fig. 3a. Das Umlenkstück 3 ist in dem Ausführungsbeispiel in die Zeichnungsebene hinein bzw. aus der Zeichnungsebene hinaus verschiebbar gelagert. Dazu sind hier die beiden Bolzen 301 vorgesehen. Die beiden zylindrischen Bolzen 301 verlaufen in die Zeichnungsebene hinein. Das Umlenkstück 3 weist zur Aufnahme der Bolzen 301 zwei kreisförmige Bohrungen auf. Der Innendurchmesser dieser kreisförmigen Bohrungen ist dabei etwas größer als der Außendurchmesser der Bolzen 301. So entsteht ein Schiebesitz zwischen den Bolzen 301 und dem Umlenkstück 3. Fig. 6b zeigt eine Draufsicht des Ausführungsbeispiels aus Fig. 6a. Hier ist gut zu erkennen, dass sich die beiden zylindrischen Bolzen 301 über beide Seiten des scheibenförmigen Umlenkstückes 3 hinaus erstrecken. Dies ermöglicht es, dass sich das Umlenkstück 3 auf den Bolzen 301 in zwei Richtungen bewegen kann, wie durch den Pfeil 302 angedeutet. Günstiger Weise werden die beiden Bolzen 301 fest an der Vorrichtung oder der Anlage angebracht, für die das Kettenumlenksystem vorgesehen ist. Diese bewegliche Lagerung des Umlenkstückes 3 auf den Bolzen 301 dient dazu, bei Anlagen, bei denen eine Kette über mehrere Umlenkstücke 3 geführt wird einen Toleranzausgleich zu ermöglichen. Sind zwischen zwei Umlenkstücken 3 ein größerer Abstand, beispielsweise mehrere Meter, vorgesehen, ist es schwierig diese zwei Umlenkstücke 3 genau zueinander fluchtend zu montieren. Eine zueinander fluchtende Positionierung von zwei Umlenkstücken 3 ist aber sehr wichtig für einen verschleißfreien oder zumindest verschleißarmen Betrieb des Kettenumlenksystems. Hier bietet das in diesem Ausführungsbeispiel dargestellte Umlenkstücke 3 große Vorteile gegenüber einem starr befestigten Umlenkstück 3 durch die bewegliche Lagerung auf den Bolzen 301 wird ein Querversatz zweier Umlenkstückes 3 oder der Querversatz zwischen einem Umlenkstückes 3 und einer fixen Kettenbefestigung am Ende der Kette ausgeglichen, das oder ein Umlenkstücke 3 bewegt sich einfach von selbst entlang der Bolzen 301 in die Position, in der die Kette den geringsten Laufwiderstand erfährt. Günstiger Weise sind an einer Anlage alle Umlenkstücke 3 bis auf eines verschiebbar gelagert. Selbstverständlich können in einer Anlage aber auch starr montierte und verschiebbare Umlenkstücke 3 in verschiedenen Kombinationen angeordnet werden. Eine Verschiebbarkeit oder bewegliche Lagerung eines Umlenkstückes 3 kann auch durch das Vorsehen einer anderen Anzahl von Bolzen 301 realisiert werden. Zur Lagerung können auch beispielsweise nur ein Bolzen 301 oder drei Bolzen 301 vorgesehen werden. Weiterhin ist es nicht zwingend erforderlich, zylindrische Bolzen 301 zu verwenden. Denkbar sind auch Bolzen 301 mit einem anderen Querschnitt, beispielsweise mit einem eckigen Querschnitt. Die Bohrungen oder Ausnehmungen im Umlenkstück 3 sind dann dementsprechend an die äußere Form der Bolzen 301 anzupassen. Um die Verschiebbarkeit des Umlenkstückes 3 zu verbessern, kann zwischen den Bolzen 301 und dem Umlenkstücke 3 ein Gleitmittel vorgesehen werden. Bei diesem Gleitmittel kann es sich entweder um einen Schmierstoff wie Fett oder Öl handeln oder aber auch um eine Gleitbuchse, welche zwischen Bolzen 301 und Umlenkstück 3 angeordnet wird. Eine solche Gleitbuchse kann beispielsweise aus Kunststoff oder Messing bestehen und in die entsprechenden Bohrungen im Umlenkstück 3 eingepresst werden. Figur 6c zeigt eine leicht abgewandelte Ausführungsform zu den Figuren 6a und 6b. In Figur 6c sind die beiden Bolzen 301 fest, das heißt unverschieblich mit dem Umlenkstück 3 verbunden. Dies kann beispielsweise über eine Presspassung erfolgen. Die Bolzen 301 sind zur Herstellung der Beweglichkeit des Umlenkstückes 3 verschiebbar in Bohrungen in einem Lager 305 gelagert. Die Ausführungsform in Figur 6c stellt eine kinematische Umkehrung der Ausführungsform in Figur 6b dar.

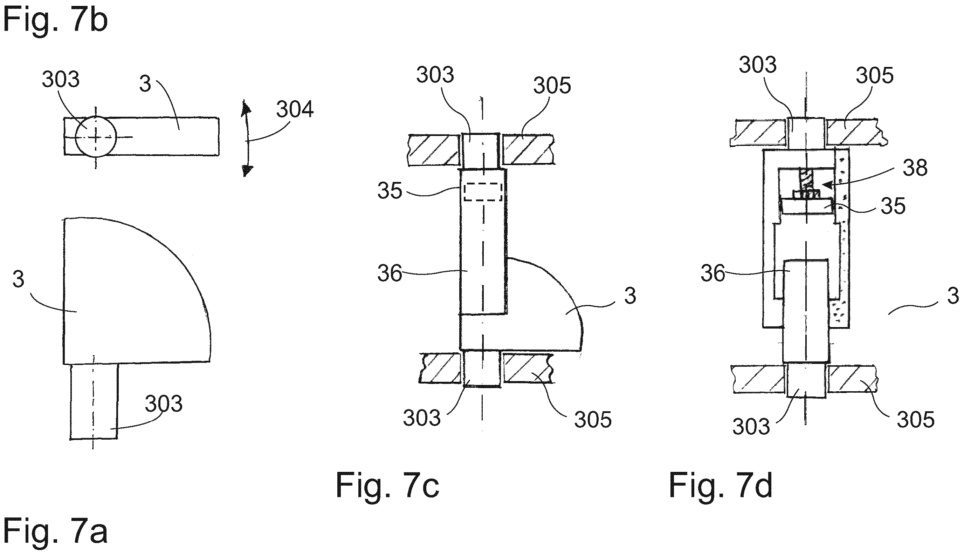

Figur 7a, 7b zeigt in einer Seitenansicht und einer Draufsicht ein weiteres Ausführungsbeispiel des erfindungsgemäßen Kettenumlenksystems. Dieses Ausführungsbeispiel dient ebenfalls dem Toleranzausgleich bzw. dem Ausgleich versehentlich entstandener Montagefehler bei der Montage eines Umlenkstückes 3 in einem Kettenumlenksystem. Während das Ausführungsbeispiel in Fig. 6a und 6b dazu vorgesehen ist, einen Querversatz zwischen zwei Umlenkstücken 3 auszugleichen, ist das Ausführungsbeispiel in Fig. 7a bis 7d dazu vorgesehen, in den Winkelversatz zwischen zwei Umlenkstücken 3 oder zwischen einem Umlenkstück 3 und einer fixen Befestigung der Kette an einem ihrer Enden auszugleichen. Ein solcher Ausgleich wird durch eine drehbare Lagerung des Umlenkstückes 3 erreicht. Dazu ist am Umlenkstück 3 eine Achse 303 angebracht. Diese Achse kann entweder drehfest am Umlenkstück 3 angeordnet sein und drehbar in einem Lager 305 geführt werden oder die Achse 303 kann auch drehbar im Umlenkstück 3 angeordnet sein und mit ihrem, vom Umlenkstück 3 wegweisenden Ende drehfest an einem anderen Teil des Kettenumlenksystems befestigt sein. Fig. 7a zeigt eine Seitenansicht eines Umlenkstückes 3 mit einer darin drehfest befestigten Achse 303. Das Umlenkstück 3 weist in dieser Ansicht die Form eines Viertelkreises auf. Nach rechts und oben ist die abgerundete Fläche 30 gerichtet, auf welcher eine nicht gezeigte Kette umgelenkt und geführt wird. Am unteren Ende des Umlenkstückes 3, der Fläche 30 abgewandt, ist die Achse 303 angeordnet. Das viertelkreisförmige Umlenkstück 3 weist zwei gerade Seiten auf. Die Achse 303 verläuft dabei rechtwinklig zu einer dieser geraden Seiten und parallel zur anderen dieser geraden Seiten. Die Achse 303 ist dabei direkt benachbart der geraden Seite angeordnet, zu der sie parallel verläuft. Durch diese Anordnung am Rand des Umlenkstückes 3 kann sich nahezu die gesamte Fläche 30 um die Achse 303 drehen. Dadurch stellt sich das Umlenkstück 3 besonders gut auf einen möglichen Winkelversatz ein und gleicht diesen aus. Fig. 7b zeigt eine Draufsicht auf das Ausführungsbeispiel aus Fig. 7a. Mit gestrichelten Linien ist die Drehachse der Achse 303 symbolisiert. Das Umlenkstück 3 ist um diese Drehachse drehbar, was durch den Pfeil 304 dargestellt ist. Wie in Fig. 7b zu sehen ist, ist der Durchmesser der Achse 303 etwas größer als die Dicke des Umlenkstückes 3. Ein größerer Durchmesser der Achse 303 erleichtert die Lagerung dieser Achse in einem Gegenstück. Der Durchmesser der Achse 303 kann jedoch auch kleiner als die Dicke des Umlenkstückes 3 gewählt werden. Bei einem kleineren Durchmesser kann die Achse mit konstantem Durchmesser direkt in eine Bohrung im Umlenkstück 3 gepresst werden. In der dargestellten Ausführungsform weist die Achse 303 im oberen Bereich einen geringeren Durchmesser auf. Dieser obere Bereich ist in eine Bohrung im Umlenkstück 3 eingepresst. Alternativ kann die Achse 303 selbstverständlich auch am Umlenkstück 3 angeschraubt oder angeschweißt werden. Zum Ausgleich eines Winkelversatzes zwischen zwei Umlenkstücken 3 dreht sich das Umlenkstück 3 im dargestellten Ausführungsbeispiel um die Drehachse der Achse 303. Die beiden Ausführungsbeispiele aus Fig. 6a, 6b und 7a bis 7d können selbstverständlich auch miteinander kombiniert werden, so dass gleichzeitig ein Querversatz und ein Winkelversatz ausgeglichen werden kann. So könnte beispielsweise die nicht gezeigte, drehfeste Lagerung für die Achse 303 wiederum verschiebbar an einem feststehenden Teil des Kettenumlenksystems angeordnet sein. Diese verschiebbare Lagerung, in der dann wiederum die Achse 303 drehbar gelagert ist ermöglicht einen gleichzeitigen Ausgleich von Positions- und Winkelfehlern. Alternativ könnte natürlich auch das Umlenkstück 3 zur Achse 303 seitlich verschiebbar ausgeführt sein. In Figur 7c ist eine im Vergleich zu Figur 7a abgewandelte Form eines drehbar gelagerten Umlenkstückes 3 zu sehen. Die in Fig. 7c dargestellte Ausführungsform ist auf zwei Seiten, oben und unten, mit einer Achse 303 versehen, welche jeweils in einem ortsfesten Lager 305 drehbar gelagert ist. Die Lagerung auf zwei Seiten ergibt eine verbesserte Stabilität. Am Umlenkstück 3 ist für die zweite, obere Lagerung eine Führung 36 angebracht. Das Kettenstück 2 (nicht dargestellt) ist durch diese Führung 36 geführt. An der Führung 36 ist im oberen Bereich ein Niederhalter 35 angebracht, der gestrichelt dargestellt ist. Dieser Niederhalter 35 dient dazu sicherzustellen, dass das Kettenstück 2 nicht ungewollt vom Umlenkstück 3 springt. Das Funktionsprinzip eines solchen Niederhalters 35 ist zu Figur 12 beschrieben. Die Führung 36 und damit auch der Niederhalter 35 drehen sich bei einer Bewegung des Umlenkstückes 3 mit diesem mit. Figur 7d zeigt eine Frontalansicht der in Figur 7c dargestellten Ausführungsform. Von vorne ist zu erkennen, dass die Führung 36 seitlich am Umlenkstück 3 befestigt ist und an ihrem oberen Ende eine zweite Achse 303 zur Lagerung trägt. Auf der rechten Seite ist ein Teilbereich der Führung 36 gepunktet dargestellt. Dieser Teilbereich ist optional: in einer Variante kann die Führung sich geschlossen auf beiden Seiten des Umlenkstückes 3 erstrecken. In diesem Fall muss das Kettenstück 2 (nicht dargestellt) von vorne in die Führung zwischen Umlenkstück 3 und Niederhalter 35 eingeführt werden. Vorteilhaft an dieser geschlossenen Ausführungsform ist ihre hohe Stabilität. Alternativ kann der gepunktet dargestellte Bereich der Führung 36 auch weggelassen werden, so dass sich die Führung nur auf einer Seite des Umlenkstückes 3 erstreckt. Diese Ausführungsform ist vorteilhaft, da das Kettenstück 2 auch von der Seite, von dort wo sich der gepunktet dargestellte Bereich befindet, in die Führung 36 eingesetzt werden kann. Eine Ausführungsform ohne den gepunktet dargestellten Bereich ist jedoch weniger stabil als die Ausführungsform mit einer beidseitigen Führung 36. Der Niederhalter 35 ist einstellbar in der Führung 36 angeordnet. Die nach außen gerichteten Flächen des Niederhalters 35 werden von den Innenflächen der Führung 36 geführt. Niederhalter 35 und Führung 36 sind zudem über den Einstellmechanismus 38 miteinander verbunden. In einer besonders einfachen Ausführungsform wird dieser Einstellmechanismus 38 durch einen Gewindebolzen gebildet, auf dem eine oder mehrere Muttern zur Festlegung der vertikalen Position des Niederhalters 35 angebracht sind. Der Einstellmechanismus 38 kann selbstverständlich auch anders ausgeführt sein. Durch den Einstellmechanismus 38 kann der Niederhalter 35 bei Inbetriebnahme oder während des Betriebs des Kettenumlenksystems ein- oder nachgestellt werden.

Figur 8 zeigt in einer Seitenansicht ein weiteres Ausführungsbeispiel des erfindungsgemäßen Kettenumlenksystems. In den bisher beschriebenen Ausführungsbeispielen wird die Kette auf dem Umlenkstück 3 stets auf einer konkaven oder konvexen Fläche 30 mit konstantem Krümmungsradius geführt bzw. umgelenkt. In dem in Fig. 8 dargestellten Ausführungsbeispiel ist ein Umlenkstück 3 zu sehen, welches eine Fläche 30 aufweist, die keinen konstanten Krümmungsradius hat. Die Fläche 30 ist hier an ihren Enden kreisförmig gekrümmt und weist zwischen diesen gekrümmten Bereichen einen geraden, planen Bereich auf. In der Seitenansicht weist das Umlenkstück zwei zueinander im rechten Winkel stehende gerade Kanten auf, die der Fläche 30 abgewandt sind.

Figur 9 zeigt in einer Seitenansicht ein weiteres Ausführungsbeispiel des erfindungsgemäßen Kettenumlenksystems. Auch dieses Ausführungsbeispiel eines Umlenkstückes 3 weist keine Fläche 30 mit konstantem Krümmungsradius auf. Vielmehr weist die Fläche 30 hier drei gekrümmte Bereiche mit unterschiedlichen Krümmungsradien und zwei gerade, plane Bereiche auf. In der Seitenansicht hat das Umlenkstück 3 hier nur eine gerade Kante, die der Fläche 30 abgewandt ist.

Figur 10 zeigt in einer Seitenansicht schematisch den Effekt des Aufschwingens einer Kette. Fig. 10 besteht aus zwei Teilbildern die links und rechts dargestellt sind. In beiden Teilbildern ist jeweils ein Kettenglied eines Kettenstücks 2 zu sehen. In beiden Teilbildern ist das gleiche Kettenglied zu verschiedenen Zeitpunkten dargestellt. Das Kettenglied (das Kettenstück 2) bewegt sich von links nach rechts. Im linken Teilbild ist das Kettenglied in einem Zustand gezeigt, an dem beide Kettenrollen auf dem Umlenkstück 3 aufliegen. Es ist nur der obere Teil des Umlenkstücks 3 dargestellt. Die beiden Kettenrollen liegen rechts und links vom höchsten Punkt des Umlenkstücks 3 auf. Im rechten Teilbild ist das gleiche Kettenglied dargestellt, welches nun ein Stück nach rechts gewandert ist. Die linke Kettenrolle des Kettengliedes liegt nun auf dem höchsten Punkt des Umlenkstücks 3 auf. Auf ihrem Weg vom linken Teilbild zum rechten Teilbild hat sich das Kettenglied nach oben bewegt indem die linke Kettenrolle auf dem Umlenkstück 3 bis zum höchsten Punkt gerollt ist. Auf seinem weiteren Weg nach rechts bewegt sich das Kettenglied wieder nach unten, da die linke Kettenrolle bergab vom höchsten Punkt des Umlenkstücks 3 abrollt. Bei einer Bewegung des Kettenstücks 2 über das Umlenkstück 3 von links nach rechts bewegt sich das Kettenstück 2 somit um die Amplitude 210 in vertikaler Richtung. Durch diese vertikale Bewegung kann es zu einem Aufschwingen des Kettenstücks 2 kommen. Ein solches Aufschwingen ist für die meisten Anwendungen unerwünscht. Je größer der Krümmungsradius des Umlenkstücks 3 ist, auf dem das Kettenstück 2 aufliegt, desto geringer ist die Amplitude 210. Um ein ungewolltes Aufschwingen des Kettenstücks 2 zu verhindern ist also ein großer Krümmungsradius des Umlenkstücks 3 optimal. Je größer der Krümmungsradius ist, desto größer wird auch die Auflagefläche des Kettenstücks 2 auf dem Umlenkstück 3. Bei größerer Auflagefläche liegen mehr Rollen auf dem Umlenkstück 3 auf, bei gleicher Last sinkt so die Flächenpressung auf das Umlenkstück 3. Bei geringerer Flächenpressung wiederum sinken die Anforderungen an die mechanische Belastbarkeit des Umlenkstücks 3. Dadurch kann entweder ein günstigerer Werkstoff verwendet werden oder es erhöht sich bei gleichem Werkstoff die Standzeit des Umlenkstücks 3, weil der Verschleiß reduziert wird. Der Krümmungsradius bzw. die Auflagefläche des Umlenkstücks 3 und dessen Werkstoff stehen daher in einem Wirkzusammenhang. Je nach Anwendungsfall und Last müssen Krümmungsradius und Werkstoff des Umlenkstücks 3 aneinander angepasst werden. Es gibt auch Anwendungsfälle, in denen nur wenig Bauraum zur Verfügung steht und somit nur kleine Krümmungsradien für das Umlenkstücks 3 bzw. die Fläche 30 zur Verfügung stehen. In diesem Fall erhöht sich die Wahrscheinlichkeit, dass ein Kettenstück 2, das über ein oder mehrere Umlenkstücke 3 geführt wird ungewollt aufschwingt.

Figur 11 zeigt in einer Seitenansicht ein Ausführungsbeispiel des erfindungsgemäßen Kettenumlenksystems mit Verbesserungen gegen das Aufschwingen der Kette. In Fig. 11 ist ein Kettenstück 2 zu sehen, das über zwei Umlenkstücke 3 von links nach rechts geführt wird. Die Kette hat eine Teilung T, worunter der Achsabstand benachbarter Kettenrollen zu verstehen ist. In dem Fall, dass beide Umlenkstücke 3 den gleichen Krümmungsradius R1, R2 aufweisen und die höchsten Punkte beider Umlenkstücke 3 einen Abstand zueinander aufweisen, der einer natürlichen Zahl an Teilungen T entspricht, würde das zu Fig. 10 beschriebene Aufschwingen der Kette jeweils zeitgleich an beiden Umlenkstücken 3 stattfinden. Eine solche zeitgleiche, vertikale Bewegung des Kettenstücks 2 an zwei Stellen verstärkt das Aufschwingen des Kettenstücks 2 signifikant. Es wurden zwei Lösungen entwickelt, diesem verstärkten Aufschwingen des Kettenstücks 2 zu begegnen. Eine Möglichkeit ist es, den Abstand A zwischen den zwei höchsten Punkten der beiden Umlenkstücke 3 so zu wählen, dass er nicht einem geraden vielfachen der Teilung T entspricht. Unter gerade ist hier die mathematische Bedeutung zu verstehen, nämlich eine natürliche Zahl ohne Bruchanteile. Dadurch ist sichergestellt, dass die Kettenrollen zu unterschiedlichen Zeitpunkten den höchsten Punkt beider Umlenkstücke 3 überschreiten. Die Vertikalbewegung des Kettenstücks 2 an beiden Umlenkstücken 3 findet somit zeitversetzt statt und führt daher nicht zu einer Verstärkung des Aufschwingens. Die zweite erfindungsgemäße Lösung ist es, für beide Umlenkstücke 3 unterschiedliche Krümmungsradien R1 und R2 vorzusehen. Diese unterschiedlichen Krümmungsradien R1 und R2 bewirken unterschiedliche Amplituden an beiden Umlenkstücken 3, wodurch eine Verstärkung des Aufschwingens ebenfalls verhindert wird. Selbstverständlich ist es auch möglich diese beiden Möglichkeiten zur Vermeidung des Aufschwingens der Kette 2 miteinander zu kombinieren.

Figur 12 zeigt in einer Frontalansicht ein weiteres Ausführungsbeispiel des erfindungsgemäßen Kettenumlenksystems mit einem Niederhalter. In Figur 12 ist schematisch die Funktionsweise eines Niederhalters 35 dargestellt. In Figur 12 sind lediglich die Elemente dargestellt, die für das Verständnis des Niederhalters 35 erforderlich sind, möglicherweise erforderliche Verbindungselemente sind der Übersichtlichkeit halber nicht dargestellt. Unten ist in der Frontalansicht ein Umlenkstück 3 dargestellt, auf dem ein Kettenstück 2 geführt ist. Oberhalb des Kettenstückes 2 ist der Niederhalter 35 angeordnet, der hier eine dem Kettenstück 2 zugewandte Fläche aufweist, die breiter als die Breite des Kettenstückes 2 ist. Diese Fläche und die gekrümmte Fläche 30 des Umlenkstückes 3 bilden den Abstand 37. Das Kettenstück 2 weist an seinen Außenseiten jeweils eine Kettenlasche (dargestellt ist eine Innenlasche 202) auf, in der Mitte des Kettenstückes ist die Rolle 205 zu sehen. Die Kettenlaschen weisen eine Höhe h auf, die kleiner ist als der Abstand 37. Die nach außen gerichteten Kanten der Kettenlasche weisen zum Umfang der Rolle 205 einen Abstand y auf. Der Abstand z ist zwischen den äußeren Kante der Kettenlasche und der zum Kettenstück 2 gerichteten Oberfläche des Niederhalters 35 definiert. Der Abstand z ist stets kleiner als der Abstand y. Dadurch hat das Kettenstück 2 im Abstand 37 Spiel, so dass es sich im Normalbetrieb darin frei bewegen kann. Aufgrund der Dimensionierung des Abstandes 37 kann jedoch das Kettenstück 2 seine Position zwischen Umlenkstück 3 und Niederhalter 35 nicht verlassen. Dadurch kann das Kettenstück 2 auch im Falle eines Aufschwingens nicht vom Umlenkstück 3 springen.

## Patentansprüche

1. Autoparkvorrichtung mit einem Gestell (5), an dem zumindest eine bewegbare, insbesondere anhebbare oder absenkbare Plattform (6) vorgesehen ist und die Autoparkvorrichtung (4) mit einer Kette ausgestattet ist, die mindestens teilweise Teil mindestens eines Kettenumlenksystem (1) ist, wobei das Kettenumlenksystem (1) aus mindestens einem Kettenstück (2, 2a, 2c) und einem Umlenkstück (3,3a,3b) besteht, wobei das Umlenkstück (3,3a,3b) eine gebogene Fläche (30) aufweist und das Kettenstück (2, 2a, 2c) im Anwendungsfall zumindest teilweise auf der gebogenen Fläche (30) aufliegt, wodurch die Zug- oder Druckrichtung (21, 22) des Kettenstücks (2, 2a, 2c) abgelenkt ist, und wobei das jeweilige Umlenkstück (3,3a,3b) am Gestell (5) oder an der Plattform (6) angeordnet ist, und das Umlenkstück (3, 3a, 3b) so angeordnet ist, dass es einen rotatorischen Freiheitsgrad von weniger als 360° aufweist, **dadurch gekennzeichnet, dass** das Umlenkstück (3, 3a, 3b) als plattenförmige Scheibe ausgeführt ist, wobei die gebogene Fläche (30) des Umlenkstücks (3, 3a, 3b) konvex gebogen ist, wobei das Kettenstück (2, 2a, 2c) als Rollenkettenstück ausgeführt ist und die Kettenrollen dieses Rollenkettenstücks die konvex gebogene Fläche (30) des Umlenkstücks (3, 3a, 3b) berühren und bei Bewegung des Kettenstücks (2, 2a, 2c) auf der konvex gebogenen Fläche (30) abrollen.

2. Autoparkvorrichtung nach Anspruch 1, **dadurch gekennzeichnet, dass** das Umlenkstück (3, 3a, 3b) eine Dicke (33) besitzt, die geringfügig kleiner ist wie der innere Abstand der gegenüberliegenden Innenlaschen der als Rollenkette ausgebildeten Kette.

3. Autoparkvorrichtung nach einem der vorhergehenden Ansprüche, **dadurch gekennzeichnet, dass** das Kettenstück (2, 2a, 2c) in einem ersten Bereich vertikal von einer ortsfesten Einspannstelle zu einem ersten Umlenkstück (3, 3a, 3b) verläuft, das Kettenstück (2, 2a, 2c) anschließend vom ersten Umlenkstück (3, 3a, 3b) in einem zweiten Bereich horizontal zu einem zweiten Umlenkstück (3, 3a, 3b) verläuft und abschließend von dem zweiten Umlenkstück (3, 3a, 3b) in einem dritten Bereich vertikal zu einer weiteren ortsfesten Einspannstelle verläuft.

4. Autoparkvorrichtung nach einem der vorhergehenden Ansprüche, **dadurch gekennzeichnet, dass** das Umlenkstück (3, 3a, 3b) starr angeordnet ist, so dass es gar keinen rotatorischen Freiheitsgrad aufweist.

5. Autoparkvorrichtung nach einem der vorhergehenden Ansprüche, **dadurch gekennzeichnet, dass** ein Niederhalter (35) vorgesehen ist, der in einem Abstand (37) zur gebogenen Fläche (30) des Umlenkstückes (3) angeordnet ist und das Kettenstück (2, 2a, 2c) durch diesen Abstand (37) geführt ist und das Kettenstück (2, 2a, 2c) diesen Abstand (37) durch die gemeinsame Führung von Umlenkstück (3) und Niederhalter (35) nicht verlassen kann.

6. Autoparkvorrichtung nach einem der vorhergehenden Ansprüche, **dadurch gekennzeichnet, dass** ein Befestigungsbolzen (32) vorgesehen ist, wobei das Umlenkstück (3, 3a, 3b) drehbar um die Drehachse (31) des Befestigungsbolzen (32) angeordnet ist und das Umlenkstück (3, 3a, 3b) über ein Verbindungsstück (70) mit einem Wächter (7), insbesondere einem Kettenbruchwächter oder einem Kraftwächter verbunden ist.

7. Autoparkvorrichtung nach einem der vorhergehenden Ansprüche, **dadurch gekennzeichnet, dass** das Kettenumlenksystem (1) mit zwei Umlenkstücken (3, 3a, 3b), wobei eines mit einer konvexen und eines mit einer konkaven Fläche, ausgestattet ist und die beiden gebogenen Flächen (30) zusammen einen Spalt bilden, der mindestens so groß wie der Durchmesser der Rollen eines als Rollenkette ausgebildeten Kettenstücks (2, 2a, 2c) ist.

8. Autoparkvorrichtung nach einem der vorhergehenden Ansprüche, **dadurch gekennzeichnet, dass** das als plattenförmige Scheibe ausgeführte Umlenkstück (3, 3a, 3b) quer zur Laufrichtung des Kettenstücks (2, 2a, 2c) verschiebbar ausgeführt ist.

9. Autoparkvorrichtung nach einem der vorhergehenden Ansprüche, **dadurch gekennzeichnet, dass** das Umlenkstück (3, 3a, 3b) drehbar gelagert ist, wobei eine Achse (303) vorgesehen ist, die der gebogenen Fläche (30) abgewandt am Umlenkstück (3, 3a, 3b) angeordnet ist und die Achse (303) in einem Gegenstück drehbar gelagert ist.

10. Autoparkvorrichtung nach einem der vorhergehenden Ansprüche, **dadurch gekennzeichnet, dass** zumindest ein Krümmungsradius der Fläche (30) des Umlenkstückes (3, 3a, 3b) so ausgeführt ist, dass mehrere Rollen des als Rollenkette ausgeführten Kettenstücks (2, 2a, 2c) auf der Fläche (30) aufliegen.

11. Autoparkvorrichtung nach einem der vorhergehenden Ansprüche, **dadurch gekennzeichnet, dass** zwei Umlenkstücke (3, 3a, 3b) vorgesehen sind und das Kettenstück (2, 2a, 2c) nacheinander über beide Umlenkstücke (3, 3a, 3b) geführt ist, wobei die höchsten Punkte der Umlenkstücke (3, 3a, 3b) einen Abstand (A) zueinander aufweisen und dieser Abstand (A) so ausgeführt ist, dass er nicht einem geraden Vielfachen der Teilung T des Kettenstücks (2, 2a, 2c) entspricht.

12. Autoparkvorrichtung nach einem der vorhergehenden Ansprüche, **dadurch gekennzeichnet, dass** zwei Umlenkstücke (3, 3a, 3b) vorgesehen sind und das Kettenstück (2, 2a, 2c) nacheinander über beide Umlenkstücke (3, 3a, 3b) geführt ist, und die beiden Flächen (30) unterschiedliche Krümmungsradien (R1, R2) aufweisen.

13. Autoparkvorrichtung nach einem der vorhergehenden Ansprüche, **dadurch gekennzeichnet, dass** das Kettenumlenksystem (1) als Gleichlaufeinheit dient und dabei insbesondere dafür sorgt, dass die jeweiligen gegenüberliegenden Plattformenden oder - seiten, wo die Kettenumlenksysteme (1) an der Plattform angeordnet sind, mit gleicher Geschwindigkeit angehoben oder abgesenkt werden, um so ein Verkanten der Plattform in dem Gestell bzw. der Hubanordnung zu vermeiden und so einen möglichst ausfallfreien Betrieb der Autoparkvorrichtung zu ermöglichen.

## Claims

1. Car parking device with a frame (5) on which at least one movable, in particular raisable or lowerable platform (6) is provided and the car parking device (4) is equipped with a chain which is at least partially part of at least one chain deflection system (1), wherein the chain deflection system (1) consists of at least one chain piece (2, 2a, 2c) and a deflection piece (3, 3a, 3b), wherein the deflection piece (3, 3a, 3b) has a curved surface (30) and the chain piece (2, 2a, 2c), in the case of use, rests at least partially on the curved surface (30), as a result of which the pulling or pushing direction (21, 22) of the chain piece (2, 2a, 2c) is deflected, and wherein the respective deflection piece (3, 3a, 3b) is arranged on the frame (5) or on the platform (6), and the deflection piece (3, 3a, 3b) is arranged to have a rotational degree of freedom of less than 360°, **characterised in that** the deflection piece (3, 3a, 3b) is designed as a plate-shaped disc, wherein the curved surface (30) of the deflection piece (3, 3a, 3b) is convexly curved, wherein the chain piece (2, 2a, 2c) is designed as a roller chain piece and the chain rollers of this roller chain piece contact the convexly curved surface (30) of the deflection piece (3, 3a, 3b) and roll on the convexly curved surface (30) when the chain piece (2, 2a, 2c) moves.

2. Car parking device according to claim 1, **characterised in that** the deflection piece (3, 3a, 3b) has a thickness (33) which is slightly smaller than the inner distance of the opposing inner plates of the chain formed as a roller chain.

3. Car parking device according to one of the preceding claims, **characterized in that** the chain piece (2, 2a, 2c) runs vertically in a first region from a positionally fixed clamping point to a first deflection piece (3, 3a, 3b), the chain piece (2, 2a, 2c) then runs horizontally from the first deflection piece (3, 3a, 3b) in a second region to a second deflection piece (3, 3a, 3b) and finally runs vertically from the second deflection piece (3, 3a, 3b) in a third region to a further positionally fixed clamping point.

4. Car parking device according to one of the preceding claims, **characterised in that** the deflection piece (3, 3a, 3b) is rigidly arranged so that it has no rotational degree of freedom at all.

5. Car parking device according to one of the preceding claims, **characterised in that** a hold-down device (35) is provided which is arranged at a distance (37) from the curved surface (30) of the deflection piece (3) and the chain piece (2, 2a, 2c) is guided through this distance (37) and the chain piece (2, 2a, 2c) cannot leave this distance (37) due to the joint guidance of deflection piece (3) and hold-down device (35).

6. Car parking device according to one of the preceding claims, **characterised in that** a fastening bolt (32) is provided, wherein the deflection piece (3, 3a, 3b) is arranged rotatably about the axis of rotation (31) of the fastening bolt (32) and the deflection piece (3, 3a, 3b) is connected via a connecting piece (70) to a monitor (7), in particular a chain breakage monitor or a force monitor.

7. Car parking device according to one of the preceding claims, **characterised in that** the chain deflection system (1) is equipped with two deflection pieces (3, 3a, 3b), one with a convex surface and one with a concave surface, and the two curved surfaces (30) together form a gap which is at least as large as the diameter of the rollers of a chain piece (2, 2a, 2c) designed as a roller chain.

8. Car parking device according to one of the preceding claims, **characterised in that** the deflection piece (3, 3a, 3b) designed as a plate-shaped disc is designed to be displaceable transversely to the running direction of the chain piece (2, 2a, 2c).

9. Car parking device according to one of the preceding claims, **characterised in that** the deflection piece (3, 3a, 3b) is rotatably mounted, wherein an axle (303) is provided which is arranged on the deflection piece (3, 3a, 3b) facing away from the curved surface (30) and the axle (303) is rotatably mounted in a counterpart.

10. Car parking device according to one of the preceding claims, **characterised in that** at least one radius of curvature of the surface (30) of the deflection piece (3, 3a, 3b) is designed in such a way that a plurality of rollers of the chain piece (2, 2a, 2c) designed as a roller chain rest on the surface (30).

11. Car parking device according to one of the preceding claims, **characterised in that** two deflection pieces (3, 3a, 3b) are provided and the chain piece (2, 2a, 2c) is guided successively over both deflection pieces (3, 3a, 3b), the highest points of the deflection pieces (3, 3a, 3b) being at a distance (A) from one another and this distance (A) being such that it does not correspond to an even multiple of the pitch T of the chain piece (2, 2a, 2c).

12. Car parking device according to one of the preceding claims, **characterised in that** two deflection pieces (3, 3a, 3b) are provided and the chain piece (2, 2a, 2c) is guided successively over both deflection pieces (3, 3a, 3b) and the two surfaces (30) have different radii of curvature (R1, R2).

13. Car parking device according to one of the preceding claims, **characterised in that** the chain deflection system (1) serves as a synchronisation unit, in particular ensuring that the respective opposite platform ends or sides where the chain deflection systems (1) are arranged on the platform are raised or lowered at the same speed, so as to avoid tilting of the platform in the frame or lifting arrangement and thus enable the car parking device to operate as failure-free as possible.

## Revendications

1. Dispositif de stationnement de voiture avec un châssis (5), sur lequel est prévue au moins une plate-forme (6) mobile, en particulier pouvant être soulevée ou abaissée, et le dispositif de stationnement de voiture (4) est équipé d'une chaîne qui fait au moins partiellement partie d'au moins un système de renvoi de chaîne (1), le système de renvoi de chaîne (1) étant constitué d'au moins une pièce de chaîne (2, 2a, 2c) et d'une pièce de renvoi (3, 3a, 3b), la pièce de renvoi (3, 3a, 3b) présentant une surface incurvée (30) et la pièce de chaîne (2, 2a, 2c) reposant, dans le cas d'utilisation, au moins partiellement sur la surface incurvée (30), ce qui fait que la direction de traction ou de compression (21, 22) de la pièce de chaîne (2, 2a, 2c) est déviée, et la pièce de renvoi respective (3, 3a, 3b) étant disposée sur le châssis (5) ou sur la plate-forme (6), et la pièce de renvoi (3, 3a, 3b) étant disposée de telle sorte qu'elle présente un degré de liberté en rotation inférieur à 360°, **caractérisé en ce que** la pièce de renvoi (3, 3a, 3b) est réalisée sous forme de disque en forme de plaque, la surface incurvée (30) de la pièce de renvoi (3, 3a, 3b) étant incurvée de manière convexe, la pièce de chaîne (2, 2a, 2c) étant réalisée sous forme de pièce de chaîne à rouleaux et les rouleaux de chaîne de cette pièce de chaîne à rouleaux touchant la surface incurvée de manière convexe (30) de la pièce de renvoi (3, 3a, 3b) et se déroulant sur la surface incurvée de manière convexe (30) lors du mouvement de la pièce de chaîne (2, 2a, 2c).

2. Dispositif de stationnement de voiture selon la revendication 1, **caractérisé en ce que** la pièce de renvoi (3, 3a, 3b) possède une épaisseur (33) qui est légèrement inférieure à la distance intérieure des maillons intérieurs opposés de la chaîne conçue comme une chaîne à rouleaux.

3. Dispositif de stationnement de voiture selon l'une des revendications précédentes, **caractérisé en ce que** la pièce de chaîne (2, 2a, 2c) s'étend verticalement dans une première zone depuis un point de serrage fixe jusqu'à une première pièce de renvoi (3, 3a, 3b), la pièce de chaîne (2, 2a, 2c) s'étend ensuite horizontalement de la première pièce de renvoi (3, 3a, 3b) dans une deuxième zone vers une deuxième pièce de renvoi (3, 3a, 3b) et s'étend finalement verticalement de la deuxième pièce de renvoi (3, 3a, 3b) dans une troisième zone vers un autre point de serrage fixe.

4. Dispositif de stationnement de voiture selon l'une quelconque des revendications précédentes, **caractérisé en ce que** la pièce de renvoi (3, 3a, 3b) est disposée de manière rigide de sorte qu'elle ne présente aucun degré de liberté en rotation.

5. Dispositif de stationnement de voiture selon l'une des revendications précédentes, **caractérisé en ce qu'**il est prévu un serre-flan (35) qui est disposé à une distance (37) de la surface incurvée (30) de la pièce de renvoi (3) et la pièce de chaîne (2, 2a, 2c) est guidée par cette distance (37) et la pièce de chaîne (2, 2a, 2c) ne peut pas quitter cette distance (37) grâce au guidage commun de la pièce de renvoi (3) et du serre-flan (35).

6. Dispositif de stationnement de voiture selon l'une des revendications précédentes, **caractérisé en ce qu'**il est prévu un boulon de fixation (32), la pièce de renvoi (3, 3a, 3b) étant disposée de manière à pouvoir tourner autour de l'axe de rotation (31) du boulon de fixation (32) et la pièce de renvoi (3, 3a, 3b) étant reliée par une pièce de liaison (70) à un gardien (7), en particulier un gardien de rupture de chaîne ou un gardien de force.

7. Dispositif de stationnement de voiture selon l'une des revendications précédentes, **caractérisé en ce que** le système de renvoi de chaîne (1) est équipé de deux pièces de renvoi (3, 3a, 3b), l'une présentant une surface convexe et l'autre une surface concave, et les deux surfaces incurvées (30) forment ensemble une fente au moins aussi grande que le diamètre des rouleaux d'une pièce de chaîne (2, 2a, 2c) conçue comme une chaîne à rouleaux.

8. Dispositif de stationnement de voiture selon l'une des revendications précédentes, **caractérisé en ce que** la pièce de renvoi (3, 3a, 3b) réalisée sous forme de disque en forme de plaque est réalisée de manière à pouvoir être déplacée transversalement à la direction de déplacement de la pièce de chaîne (2, 2a, 2c).

9. Dispositif de stationnement de voiture selon l'une des revendications précédentes, **caractérisé en ce que** la pièce de renvoi (3, 3a, 3b) est montée à rotation, un axe (303) étant prévu, qui est disposé sur la pièce de renvoi (3, 3a, 3b) à l'opposé de la surface incurvée (30) et l'axe (303) étant monté à rotation dans une contre-pièce.

10. Dispositif de stationnement de voiture selon l'une des revendications précédentes, **caractérisé en ce qu'**au moins un rayon de courbure de la surface (30) de la pièce de renvoi (3, 3a, 3b) est réalisé de manière que plusieurs rouleaux de la pièce de chaîne (2, 2a, 2c) réalisé sous forme de chaîne à rouleaux reposent sur la surface (30).

11. Dispositif de stationnement de voiture selon l'une des revendications précédentes, **caractérisé en ce qu'**il est prévu deux pièces de renvoi (3, 3a, 3b) et **en ce que** la pièce de chaîne (2, 2a, 2c) est guidée successivement sur les deux pièces de renvoi (3, 3a, 3b), les points les plus hauts des pièces de renvoi (3, 3a, 3b) présentant un écartement (A) entre eux, cet écartement (A) étant réalisé de manière à ne pas correspondre à un multiple pair du pas T de la pièce de chaîne (2, 2a, 2c).

12. Dispositif de stationnement de voiture selon l'une quelconque des revendications précédentes, **caractérisé en ce qu'**il est prévu deux pièces de renvoi (3, 3a, 3b) et **en ce que** la pièce de chaîne (2, 2a, 2c) est guidée successivement sur les deux pièces de renvoi (3, 3a, 3b) et les deux surfaces (30) présentent des rayons de courbure (R1, R2) différents.

13. Dispositif de stationnement de voiture selon l'une des revendications précédentes, **caractérisé en ce que** le système de renvoi de chaîne (1) sert d'unité de synchronisation, en veillant notamment à ce que les extrémités ou côtés opposés respectifs de la plate-forme, où les systèmes de renvoi de chaîne (1) sont disposés sur la plate-forme, soient levés ou abaissés à la même vitesse, de manière à éviter un coincement de la plate-forme dans le châssis ou l'ensemble de levage et à permettre ainsi un fonctionnement du dispositif de stationnement de voiture avec le moins de défaillances possible.
